# EUROPÄISCHE PATENTSCHRIFT

(11) **EP 4 258 857 B1**
(45) Veröffentlichungstag und Bekanntmachung des Hinweises auf die Patenterteilung: **12.02.2025**
(21) Anmeldenummer: 22768415.6
(22) Anmeldetag: 23.08.2022
(51) Int. Cl.: A01G 13/02, A01G 13/10

(54) **PFLANZENSCHUTZVORRICHTUNG UND VERFAHREN ZUR HERSTELLUNG DER PFLANZENSCHUTZVORRICHTUNG**
PLANT PROTECTION DEVICE, AND METHOD FOR PRODUCING THE PLANT PROTECTION DEVICE
DISPOSITIF DE PROTECTION DE PLANTES ET PROCÉDÉ DE FABRICATION DU DISPOSITIF DE PROTECTION DE PLANTES

(30) Priorität: 23.08.2021 DE 102021121786
(43) Veröffentlichungstag der Anmeldung: 18.10.2023
(73) Patentinhaber: Schwendemann, Daniel, 88630 Pfullendorf (DE); Schwendemann, Simone, 88630 Pfullendorf (DE)
(72) Erfinder: SCHWENDEMANN, Philipp, 88630 Pfullendorf (DE); SCHWENDEMANN, Lea, 88630 Pfullendorf (DE); SCHWENDEMANN, Dominik, 88630 Pfullendorf (DE); SCHWENDEMANN, Daniel, 88630 Pfullendorf (DE); SCHWENDEMANN, Simone, 88630 Pfullendorf (DE)
(74) Vertreter: Daub, Thomas
(86) Internationale Anmeldenummer: PCT/EP2022/073400
(87) Internationale Veröffentlichungsnummer: WO 2023/025763

(56) Entgegenhaltungen:
- WO-A1-2022/073143
- DE-U1- 29 815 946
- US-A1- 2003 208 953
- US-B1- 8 745 920
- US-B2- 10 765 071

## Beschreibung

### Stand der Technik

Die Erfindung betrifft eine Pflanzenschutzvorrichtung zum Schutz zumindest einer Pflanze, insbesondere eines Baumes.

Es sind bereits Pflanzenschutzvorrichtungen mit zumindest einem einstückig ausgebildeten Grundkörper vorgeschlagen worden, welcher dazu vorgesehen ist, zumindest eine Durchführung zumindest teilweise zu umschließen, wobei der Grundkörper aus einem vollständig biologisch abbaubaren Material ausgebildet ist. Aus der DE 20 2021 101 762 U1, ist ein Verbundmaterial für eine Verbissschutzvorrichtung bekannt. Die Druckschrift US 8,745,920 B1 offenbart ein Pflanzenschutzgerät, das die Funktionalität eines Pflanzenschutzes mit fester Wand, der sich gut für die Etablierung einer neuen Pflanze/ eines neuen Sämlings eignet, und eines Pflanzenschutzes im perforierten Stil, der sich gut für eine etablierte Pflanze eignet, kombiniert.

Die Aufgabe der Erfindung besteht insbesondere darin, eine umweltfreundliche Pflanzenschutzvorrichtung mit vorteilhaft geringen Herstellungskosten und einer gleichzeitig vorteilhaft hohen Stabilität zur Verfügung zu stellen, welche insbesondere die Nachteile des vorbeschriebenen Stands der Technik beheben. Die Aufgabe wird erfindungsgemäß durch die Merkmale der Ansprüche 1 und 20 gelöst, während vorteilhafte Ausgestaltungen und Weiterbildungen der Erfindung den Unteransprüchen entnommen werden können.

### Vorteile der Erfindung

Die Erfindung geht aus von einer Pflanzenschutzvorrichtung mit zumindest einem einstückig ausgebildeten Grundkörper, welcher dazu vorgesehen ist, insbesondere zum Schutz zumindest einer Pflanze, zumindest eine Durchführung zumindest teilweise zu umschließen, wobei der Grundkörper aus einem vollständig, insbesondere rückstandslos, biologisch abbaubaren Material ausgebildet ist.

Es wird vorgeschlagen, dass der Grundkörper als eine Skelettstruktur ausgebildet ist. Unter einer "Skelettstruktur" soll insbesondere eine, vorzugsweise gerüstartige, dreidimensionale Stützstruktur aus einer Vielzahl von miteinander verbundenen Elementen, insbesondere Streben, verstanden werden. Bevorzugt sind die Elemente, insbesondere Streben, der Skelettstruktur jeweils höchstens über 50%, vorzugsweise höchstens über 30% und bevorzugt höchstens über 20%, einer maximalen Außenfläche des jeweiligen Elements an anderen Elementen der Skelettstruktur angeordnet. Vorzugsweise sind die Elemente der Skelettstruktur über gedachte Verbindungsstellen miteinander verbunden. Insbesondere ist/sind die Skelettstruktur und/oder alle Elemente der Skelettstruktur einstückig ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Bevorzugt erstreckt sich der Grundkörper zumindest im Wesentlichen vollständig über eine maximale Längserstreckung der Pflanzenschutzvorrichtung. Vorzugsweise umschließt der Grundkörper die Durchführung, insbesondere in zumindest einem montierten Betriebszustand, hülsenartig. Insbesondere umschließt der Grundkörper die Durchführung, insbesondere in zumindest einem montierten Betriebszustand, entlang einer Längsachse des Grundkörpers betrachtet zumindest im Wesentlichen vollständig. Es ist denkbar, dass der Grundkörper erst bei einem Anordnen und/oder Befestigen an einer zu schützenden Pflanze die Durchführung zumindest im Wesentlichen vollständig umschließt. Beispielsweise ist der Grundkörper dazu vorgesehen, bei dem Anordnen und/oder Befestigen an einer zu schützenden Pflanze um die Durchführung angeordnet, insbesondere gebogen und/oder herumgelegt, zu werden. Alternativ oder zusätzlich ist denkbar, dass die Pflanzenschutzvorrichtung eine Mehrzahl von Grundkörpern umfasst, die insbesondere jeweils als eine Skelettstruktur ausgebildet sind. Bevorzugt sind die Grundkörper dazu vorgesehen, insbesondere zum Schutz zumindest einer Pflanze, die Durchführung zusammen zumindest teilweise zu umschließen. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere erstreckt sich die Durchführung zumindest im Wesentlichen vollständig über die maximale Längserstreckung der Pflanzenschutzvorrichtung. Bevorzugt ist die Pflanzenschutzvorrichtung dazu vorgesehen, über die Durchführung an zumindest einer zu schützenden Pflanze angeordnet zu werden, wobei insbesondere die Pflanze zumindest teilweise innerhalb der Durchführung angeordnet ist.

Vorzugsweise ist die Pflanzenschutzvorrichtung zu einem Schutz von Bäumen, insbesondere von Waldbäumen oder Obstbäumen, Setzlingen und/oder Sträuchern, insbesondere von Weinreben, vorgesehen. Bevorzugt ist die Pflanzenschutzvorrichtung als ein Verbiss- und/oder Fegeschutz für Pflanzen, insbesondere Bäume und Obstbäume und/oder Setzlinge und/oder Sträucher, insbesondere von Weinreben, ausgebildet und insbesondere dazu vorgesehen, Tiere, vorzugsweise Wild, insbesondere Schalenwild, an einem Verzehr und/oder einem Beschädigen der Pflanze zu hindern. In einer bevorzugten Ausgestaltung ist die Pflanzenschutzvorrichtung dazu vorgesehen, die Pflanze in einem frühen Wachstumsstadium zu schützen, vorzugsweise bis die Pflanze eine gewisse Größe/Höhe erreicht hat. Bevorzugt ist die Pflanzenschutzvorrichtung zu einem Schutz von genau einer Pflanze, insbesondere einem Baum oder einem Setzling, vorgesehen, wobei die Pflanzenschutzvorrichtung dazu vorgesehen ist, über die Durchführung um die Pflanze angeordnet zu werden. Vorzugsweise entspricht eine maximale Quererstreckung der Pflanzenschutzvorrichtung, insbesondere des Grundkörpers, in einem Betriebszustand zum Schutz einer Pflanze, vorzugsweise in einem die Durchführung umschließenden Zustand, höchstens 1 m, vorzugsweise höchstens 0,5 m und bevorzugt höchstens 0,25 m. Insbesondere ist die maximale Quererstreckung der Pflanzenschutzvorrichtung in Abhängigkeit von der zu schützenden Pflanze gewählt. Bevorzugt beträgt die maximale Längserstreckung der Pflanzenschutzvorrichtung, insbesondere des Grundkörpers, mindestens 20 cm, vorzugsweise mindestens 40 cm und bevorzugt mindestens 50 cm. Insbesondere ist die maximale Längserstreckung der Pflanzenschutzvorrichtung in Abhängigkeit von der zu schützenden Pflanze gewählt. Bevorzugt erstreckt sich die maximale Quererstreckung der Pflanzenschutzvorrichtung, insbesondere des Grundkörpers, zumindest im Wesentlichen senkrecht zur maximalen Längserstreckung der Pflanzenschutzvorrichtung, insbesondere des Grundkörpers. Unter "im Wesentlichen senkrecht" soll insbesondere eine Ausrichtung einer Geraden, einer Ebene oder einer Richtung, insbesondere einer die maximale Längserstreckung der Pflanzenschutzvorrichtung oder des Grundkörpers umfassenden Geraden, relativ zu einer anderen Geraden, einer anderen Ebene oder einer Bezugsrichtung, insbesondere einer die maximale Quererstreckung der Pflanzenschutzvorrichtung oder des Grundkörpers umfassenden Geraden, verstanden werden, wobei die Gerade, die Ebene oder die Richtung und die andere Gerade, die andere Ebene oder die Bezugsrichtung, insbesondere in einer Projektionsebene betrachtet, einen Winkel von 90° mit einer maximalen Abweichung von kleiner als 8°, vorteilhaft kleiner als 5° und besonders vorteilhaft kleiner als 2°, aufspannen. Bevorzugt ist die Pflanzenschutzvorrichtung, insbesondere der Grundkörper dazu vorgesehen, die Durchführung an zumindest zwei entlang einer Mittelachse des Grundkörpers und/oder der Durchführung ausgebildeten Enden offen auszubilden.

Unter einem "vollständig biologisch abbaubaren Material" soll insbesondere ein Material verstanden werden, das rückstandsfrei, insbesondere frei von Kunststoffrückständen, vorzugsweise Makro-, Mikro- und/oder Nanoplastikrückständen, frei von SVHC-Rückständen und/oder frei von (schwer-)metallischen Rückständen verwittert. Bevorzugt ist das Material verschieden von Polypropylen und Polypropylen-Gemischen ausgebildet. Insbesondere ist das Material verschieden von so genannten biohybriden Kunststoffen ausgebildet. Insbesondere ist das Material verschieden von oxo-abbaubaren Kunststoffen ausgebildet, welche insbesondere lediglich in sehr kleine Kunststoff-Fragmente zerfallen und nicht vollständig abgebaut werden können. Es ist denkbar, dass das Material bei Veraschung einen Glühverlust, insbesondere nach der Norm DIN EN ISO 3451-1 (2008) und/oder DIN 18128 (2002), von mehr als 60%, vorzugsweise mehr als 70% und besonders bevorzugt mehr als 80%, aufweist. Es ist denkbar, dass der Grundkörper aus einer Mehrzahl von verschiedenen jeweils vollständig, insbesondere rückstandslos, biologisch abbaubaren Materialien ausgebildet ist. Bevorzugt ist die Pflanzenschutzvorrichtung zumindest im Wesentlichen vollständig aus vollständig, insbesondere rückstandslos, biologisch abbaubaren Materialien ausgebildet. Vorzugsweise ist die Pflanzenschutzvorrichtung, vorzugsweise die vollständig, insbesondere rückstandslos, biologisch abbaubaren Materialien der Pflanzenschutzvorrichtung, dazu vorgesehen, nach einer, insbesondere in Abhängigkeit von einer chemischen Zusammensetzung der Materialien vorgebbaren, Zeitdauer, von insbesondere frühestens drei, vorzugsweise frühestens vier, bevorzugt frühestens sechs und besonders bevorzugt nach frühestens sieben Vegetationsperioden, zu verrotten. Bevorzugt ist die Pflanzenschutzvorrichtung innerhalb dieser Zeitdauer dazu vorgesehen, die Pflanze zu schützen. Vorzugsweise zeigt die Pflanzenschutzvorrichtung innerhalb dieser Zeitdauer keine wesentlichen Verrottungserscheinungen und behält insbesondere zumindest teilweise eine strukturelle Integrität bei, wobei insbesondere der Grundkörper die Durchführung zumindest teilweise umschließt. Insbesondere ist das/sind vollständig, insbesondere rückstandslos, biologisch abbaubare Material/ien dazu vorgesehen, sich innerhalb eines ökologisch verträglichen Zeitraums zu einem Großteil zu Kohlenstoffdioxid (CO₂) und siebbaren Rückständen geringer, vorzugsweise verschwindender, Ökotoxizität zu zersetzen. Vorzugsweise zersetzen sich die organischen Anteile des Materials innerhalb des ökologisch verträglichen Zeitraums zumindest zu 90 % in CO₂. Insbesondere erfolgt eine Zersetzung des Materials zumindest zu einem Großteil durch Mikroorganismen. Insbesondere führt eine Zersetzung des Materials zu einer vorzugsweise vollständigen Umwandlung zu CO₂ und/oder Biomasse. Vorzugsweise ist 90 % des nicht zu CO₂ umgewandelten Rests des Materials nach einem Verstreichen des ökologisch verträglichen Zeitraums durch ein Sieb mit einem maximalen Sieblochdurchmesser von 2 mm siebbar. Der ökologisch verträgliche Zeitraum beträgt insbesondere zumindest 3 Jahre, vorteilhaft zumindest 4 Jahre, bevorzugt zumindest 6 Jahre und besonders bevorzugt zumindest 7 Jahre. Außerdem beträgt der ökologisch verträgliche Zeitraum insbesondere höchstens 30 Jahre, vorzugsweise höchstens 25 Jahre, vorteilhaft höchstens 15 Jahre und bevorzugt höchstens 10 Jahre. Insbesondere weisen die Rückstände des Materials keine Konzentrationen der Elemente Zink, Kupfer, Nickel, Cadmium, Blei, Quecksilber, Chrom, Molybdän, Selen, Arsen und Fluor oder nur geringe Konzentrationen der genannten Elemente auf, welche die in der Norm DIN EN 13432:2000 genannten Grenzwerte nicht überschreiten. Vorzugsweise weisen Rückstände des Materials, insbesondere im Gegensatz zu Rückständen von Polyvinylchlorid, keine Konzentrationen von Chlorwasserstoff auf. Insbesondere erzeugt das Material oder Rückstände des Materials keine negativen Effekte auf einen natürlichen Kompostierungsprozess. Insbesondere erfüllen zu dem Material identisch ausgebildete Testfasern zumindest die vorgenannten Bedingungen an Ökotoxizität, Siebbarkeit und Umwandlung in CO₂ innerhalb des ökologisch verträglichen Zeitraums, wenn die Testfasern einem Testversuch unter den in der Norm DIN EN ISO 14855:2004-10 aufgeführten Kompostierbedingungen unterzogen werden. Insbesondere ist das vollständig, insbesondere rückstandslos, biologisch abbaubare Material vollständig von Organismen, insbesondere Mikroorganismen, zu Biomasse verstoffwechselbar.

Die Pflanzenschutzvorrichtung umfasst vorzugsweise zumindest ein Befestigungsmittel zu einer Befestigung der Pflanzenschutzvorrichtung zu einem Schutz der Pflanze. Es ist denkbar, dass die Pflanzenschutzvorrichtung zumindest ein Stützelement zu einem Abstützen zumindest des Grundkörpers umfasst. Alternativ ist denkbar, dass die Pflanzenschutzvorrichtung dazu vorgesehen ist, an der zu schützenden Pflanze abgestützt zu werden. Insbesondere ist das zumindest eine Befestigungsmittel dazu vorgesehen, den Grundkörper an dem Stützelement und/oder der Pflanze zu Befestigen. Beispielsweise ist das Befestigungsmittel als eine Schnur, als ein Haken, als eine Öse, als ein Kabelbinder o.dgl. ausgebildet. Besonders bevorzugt ist das Befestigungsmittel aus einem vollständig, insbesondere rückstandslos, biologisch abbaubaren Material ausgebildet. Beispielsweise ist das Befestigungsmittel aus Hanfseil, aus PHB, aus PLA, aus einer Lignin-Mischung, aus einem Gelatinegemisch o.dgl. ausgebildet. Bevorzugt ist das Stützelement aus einem vollständig, insbesondere rückstandslos, biologisch abbaubaren Material ausgebildet. Beispielsweise ist das Stützelement als ein Holzpfahl o.dgl. ausgebildet.

Durch die erfindungsgemäße Ausgestaltung der Pflanzenschutzvorrichtung kann eine vorteilhaft hohe Stabilität der vollständig biologisch abbaubaren Pflanzenschutzvorrichtung erreicht werden. Es können vorteilhaft geringe Herstellungskosten ermöglicht werden, insbesondere da der zumindest eine Grundkörper die zu schützende Pflanze vollständig umgeben kann und zusätzliche Bauteile und/oder eine massive Ausgestaltung des Grundkörpers entfallen können.

Erfindungsgemäß wird vorgeschlagen, dass der als Skelettstruktur ausgebildete Grundkörper aus einer Vielzahl von über Verbindungspunkte einstückig miteinander ausgebildeter Streben gebildet ist, welche von einer Außenseite des Grundkörpers zu einer der Durchführung zugewandten Innenseite des Grundkörpers hin eine Vielzahl von Ausnehmungen begrenzen. Die Verbindungspunkte sind durch die Streben, welche, insbesondere direkt, durch ein Extrusionsverfahren aus dem vollständig, insbesondere rückstandslos, biologisch abbaubaren Material hergestellt sind, gebildet. Die Verbindungspunkte sind insbesondere durch nachträgliches Verbinden der bereits ausgebildeten Streben hergestellt. Die Verbindungspunkte werden bei einem Aufbringen einer zweiten Lage an extrudierten Streben über eine erste Lage an extrudierten Streben auf dem Extrusionskörper gebildet. Dabei sind die Verbindungspunkte mit der, insbesondere durch ein Extrusionsverfahren ausgebildeten Strebe, stoffschlüssig miteinander verbunden. Es ist denkbar, dass die Verbindungspunkte durch den Extrusionskörper und/oder eine weitere Walze miteinander stoffschlüssig verpresst werden. Es kann eine vorteilhaft hohe Robustheit und Stabilität des Grundkörpers erreicht werden. Durch die Ausgestaltung des Grundkörpers kann vorteilhaft ausreichend Licht und Luft durch die Pflanzenschutzvorrichtung an die zu schützende Pflanze gelangen. Es kann ein ungewolltes Blockieren des Zugangs zur zu schützenden Pflanze für kleine Tiere, wie beispielsweise Nützlinge, vorteilhaft verhindert werden. Insbesondere ist die Außenseite des Grundkörpers der Durchführung abgewandt. Bevorzugt sind die Streben in einem sich entlang zumindest einer Richtung an der Außenfläche des Grundkörpers, insbesondere entlang einer Umfangsrichtung um die Mittelachse des Grundkörpers, periodisch wiederholenden Muster angeordnet. Es ist aber auch denkbar, dass die Streben in einer zufälligen und/oder ungeordneten Anordnung ausgebildet sind. Insbesondere sind die Streben jeweils gebogen oder zumindest im Wesentlichen geradlinig ausgebildet. Unter "im Wesentlichen geradlinig" soll insbesondere eine Ausgestaltung eines Bauteils, insbesondere einer der Streben, verstanden werden, wobei entlang einer Haupterstreckungsachse des Bauteils ausgebildete Seitenflächen des Bauteils jeweils zumindest im Wesentlichen parallel zu einer Seitenfläche eines kleinsten geometrischen Quaders ausgerichtet sind, welcher das Bauteil gerade noch vollständig umschließt. Unter "im Wesentlichen parallel" soll insbesondere eine Ausrichtung einer Geraden, einer Ebene oder einer Richtung, insbesondere einer durch die Seitenfläche des Bauteils verlaufenden und parallel zur Haupterstreckungsachse des Bauteils ausgerichteten Geraden, relativ zu einer anderen Geraden, einer anderen Ebene oder einer Bezugsrichtung, insbesondere einer durch die Seitenfläche des Quaders verlaufenden und parallel zur Haupterstreckungsachse des Bauteils ausgerichteten Geraden, verstanden werden, wobei die Gerade, die Ebene oder die Richtung gegenüber der anderen Gerade, der anderen Ebene oder der Bezugsrichtung eine Abweichung von kleiner als 8°, vorteilhaft kleiner als 5° und besonders vorteilhaft kleiner als 2°, aufweist. Unter einer "Haupterstreckungsachse" eines/des Bauteils, insbesondere einer der Streben, soll dabei insbesondere eine Achse verstanden werden, welche parallel zu einer längsten Kante eines/des kleinsten geometrischen Quaders verläuft, welcher das Bauteil gerade noch vollständig umschließt. Insbesondere ist/sind der Grundkörper, insbesondere die Streben des Grundkörpers, starr oder zumindest teilweise formflexibel ausgebildet. Vorzugsweise weist der Grundkörper in einem unbelasteten und/oder ungespannten Zustand eine wesentliche dreidimensionale Erstreckung auf, wobei insbesondere Streben des Grundkörpers in unterschiedliche, alle drei Raumrichtungen umfassende Richtungen ausgerichtet sind/sein können und/oder dass die Streben insbesondere zumindest teil- und/oder abschnittsweise eine Ausrichtung in eine Richtung senkrecht zu einer Haupterstreckungsebene des Grundkörpers aufweisen. Unter einer "Haupterstreckungsebene" einer Baueinheit, insbesondere des Grundkörpers, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Bevorzugt sind die durch die Streben begrenzten Ausnehmungen über eine Außenfläche des Grundkörpers zumindest im Wesentlichen gleichmäßig verteilt angeordnet. Die durch die Streben begrenzten Ausnehmungen weisen insbesondere jeweils eine maximale Querschnittsfläche von mindestens 1 cm², vorzugsweise mindestens 2 cm² und besonders bevorzugt mindestens 3 cm², auf. Bevorzugt weisen die einzelnen Streben, insbesondere in einem von anderen Streben beabstandeten Zwischenbereich, eine mittlere Dicke von mindestens 2 mm, vorzugsweise mindestens 3 mm und bevorzugt mindestens 4 mm, auf. Vorzugsweise weisen die einzelnen Streben, insbesondere in einem von anderen Streben beabstandeten Zwischenbereich, eine mittlere Dicke von höchstens 15 mm, vorzugsweise höchstens 10 mm und besonders bevorzugt höchstens 5 mm, auf.

Erfindungsgemäß wird vorgeschlagen, dass der Grundkörper durch ein Extrusionsverfahren aus dem vollständig, insbesondere rückstandslos, biologisch abbaubaren Material hergestellt ist. Der Grundkörper besteht aus Streben, die insbesondere durch ein Extrusionsverfahren, aus dem vollständig, insbesondere rückstandslos, biologisch abbaubaren Material hergestellt sind. Die Streben sind insbesondere aus dem vollständig, insbesondere rückstandslos, biologisch abbaubaren Material extrudiert und aufeinandergelegt, um den Grundkörper, insbesondere den als Skelettstruktur ausgebildeten Grundkörper, auszubilden. Unter einem "Extrusionsverfahren" soll ein formgebendes Verfahren, das überwiegend für thermoplastische Materialien genutzt wird, verstanden werden, dabei wird das Material als zähe Masse unter hohem Druck und hoher Temperatur durch eine formgebende Öffnung gepresst. Das Verfahren kann dabei insbesondere zyklisch oder kontinuierlich erfolgen. Insbesondere können bei dem Extrusionsverfahren eine Mehrzahl von Grundkörpern kontinuierlich extrudiert und anschließend zu einzelnen Grundkörpern getrennt werden. Alternativ können bei dem Extrusionsverfahren die Grundkörper jeweils zyklisch einzeln hergestellt werden, wobei eine Extrusion insbesondere nach jedem Grundkörper unterbrochen wird. Ferner ist denkbar, dass bei dem Extrusionsverfahren ein Extrudat nach einem Auspressen nochmals verformt, insbesondere in Form, gelegt wird. Unter "zyklisch" soll in diesem Zusammenhang insbesondere verstanden werden, dass der Vorgang nach dem Aufbringen der Streben auf den Extrusionskörper ausgesetzt ist, bis der Grundkörper vom Extrusionskörper entnommen ist und der Extrusionsprozess für einen weiteren Grundkörper wieder gestartet wird. Vorzugsweise sind der Extrusionsprozess und die Herstellung der Grundkörper in einem zyklischen Extrusionsvorgang diskontinuierlich. Die extrudierten Streben, aus denen der Grundkörper geformt ist, sind bevorzugt mit einem Einstrangextruder und/oder besonders bevorzugt mit einem Mehrstrangextruder hergestellt. Vorzugsweise sind die Steben auf einen zylinderförmigen, oder einer vom Fachmann sinnvoll erachteten anderen Trägerform des Extrusionskörpers, abgelegt. Es ist denkbar, dass der Grundkörper aus Halbschalen hergestellt ist. Alternativ ist denkbar, dass der Grundkörper aus einer Vielzahl an Körpern gebildet wird. Es kann bedarfsweise eine vorteilhafte Stapelbarkeit bei der Produktion, Lieferung und Einbringung in den Forst erreicht werden.

Ferner wird vorgeschlagen, dass der Grundkörper aus Streben gebildet ist, welche, insbesondere direkt, durch ein Extrusionsverfahren aus dem vollständig, insbesondere rückstandlos, biologisch abbaubaren Material hergestellt sind. Die Streben sind insbesondere durch die Verbindungspunkte miteinander einstückig ausgebildet. Die einstückig ausgebildeten Streben, bilden mit den Verbindungspunkten die Skelettstruktur des Grundkörpers.

Des Weiteren wird vorgeschlagen, dass die Streben, insbesondere nach einer Extrusion, durch eine Vielzahl von Verbindungspunkten zu einer Skelettstruktur verbunden sind. Die Streben sind insbesondere extrudiert und aufeinandergelegt, wobei die Streben an Schnittpunkten, welche die Verbindungspunkte ausbilden, stoffschlüssig verbunden sind. Durch eine Vielzahl von Verbindungspunkten sind die Streben einstückig miteinander ausgebildet und bilden den Grundkörper aus. Zudem wird vorgeschlagen, dass der Grundkörper, insbesondere in zumindest einem Betriebszustand zum Schutz zumindest einer Pflanze, eine Mittelachse umfasst, wobei der Grundkörper die Durchführung um die Mittelachse umschließt, wobei der Grundkörper dazu vorgesehen ist, entlang einer maximalen Längserstreckung des Grundkörpers senkrecht zur Mittelachse betrachtet höchstens 70%, vorzugsweise höchstens 50% und bevorzugt höchstens 40%, eines die Durchführung ausfüllenden gedachten Körpers zu verdecken. Es können vorteilhaft geringe Materialkosten des Grundkörpers erreicht werden. Es kann ein vorteilhaft geringes Gewicht des Grundkörpers ermöglicht werden, was insbesondere eine Montage der Pflanzenschutzvorrichtung erleichtert. Es kann ein ungewolltes Blockieren des Zugangs zur zu schützenden Pflanze für kleine Tiere, wie beispielsweise Nützlinge, vorteilhaft verhindert werden. Insbesondere erstreckt sich die Mittelachse des Grundkörpers zumindest im Wesentlichen parallel zur maximalen Längserstreckung der Pflanzenschutzvorrichtung und/oder des Grundkörpers. Vorzugsweise ist der die Durchführung ausfüllende gedachte Körper, insbesondere ein die Durchführung ausbildender Bereich, senkrecht zur Mittelachse des Grundkörpers betrachtet durch die von den Streben begrenzten Ausnehmungen sichtbar. Insbesondere ist der die Durchführung ausfüllende gedachte Körper zylinderförmig oder quaderförmig ausgebildet, wobei insbesondere die Mittelachse des Grundkörpers eine Symmetrieachse des Körpers umfasst.

Ferner wird vorgeschlagen, dass der Grundkörper zumindest größtenteils aus einem Gelatinegemisch besteht. Es kann eine vorteilhaft günstige vollständig biologisch abbaubare Ausgestaltung realisiert werden. Insbesondere ist der Grundkörper, insbesondere zumindest im Wesentlichen vollständig, aus einem Gelatinegemisch ausgebildet. Vorzugsweise bildet das Gelatinegemisch ein natürliches Duroplast. Bevorzugt umfasst das Gelatinegemisch zumindest teilweise, insbesondere zu einem Großteil, Gelatine, welche insbesondere industriell vorwiegend aus tierischem Bindegewebe hergestellt ist, und zusätzlich weitere Naturfasern, wie beispielsweise Leinöl o.dgl.

Des Weiteren wird vorgeschlagen, dass der Grundkörper zumindest größtenteils aus einer Lignin-Mischung besteht. Es kann eine vorteilhaft robuste vollständig biologisch abbaubare Ausgestaltung realisiert werden. Insbesondere ist der Grundkörper, insbesondere zumindest im Wesentlichen vollständig, aus einer Lignin-Mischung ausgebildet. Bevorzugt umfasst die Lignin-Mischung zumindest teilweise, insbesondere zu einem Großteil, Lignin. Es ist denkbar, dass die Lignin-Mischung als Arboform ausgebildet ist, wobei insbesondere Lignin andere Naturfasern, wie Flachs oder Hanf beigemischt sind. Alternativ ist denkbar, dass die Lignin-Mischung ein Polyurethan ausbildet.

Des Weiteren wird vorgeschlagen, dass der Grundkörper zumindest größtenteils aus einer Material-Mischung besteht, welche Polybutylenadipat-terephthalat (PBAT), Polylactide (PLA) und Lignin umfasst. Die Material-Mischung umfasst vorzugsweise 40% bis 60%, insbesondere annähernd 50%, Polybutylenadipatterephthalat (PBAT), 30% bis 40% Polylactide (PLA) und 10% bis 30% Lignin. Die Material-Mischung bildet vorzugsweise die Lignin-Mischung aus. Es kann eine vorteilhafte robuste vollständig biologisch abbaubare Ausgestaltung realisiert werden. Insbesondere ist der Grundkörper, insbesondere zumindest im Wesentlichen vollständig, aus der Material-Mischung ausgebildet. Es ist denkbar, dass die Materialmischung zu einem Großteil aus Polybutylenadipat-terephthalat (PBAT) besteht. Es ist weiterhin denkbar, dass die Material-Mischung zumindest teilweise aus Polylactide (PLA) besteht. Ebenso ist denkbar, dass die Material-Mischung auf Stärkebasis hergestellt ist.

Zudem wird vorgeschlagen, dass der Grundkörper zumindest größtenteils aus einer Material-Mischung besteht, welche Polybutylenadipat-terephthalat (PBAT), Polylactide (PLA) und Zellulose und/oder Holzfasern umfasst. Die Material-Mischung umfasst vorzugsweise 40% bis 60%, insbesondere annähernd 50%, Polybutylenadipatterephthalat (PBAT), 30% bis 40% Polylactide (PLA) und 10% bis 30% Zellulose und/oder Holzfaser. Die Material-Mischung bildet vorzugsweise die Zellulose-Mischung aus, wobei ebenso eine Material-Mischung aus Holzfasern denkbar ist. Es kann eine vorteilhafte robuste vollständig biologisch abbaubare Ausgestaltung realisiert werden. Insbesondere ist der Grundkörper, insbesondere zumindest im Wesentlichen vollständig, aus der Material-Mischung ausgebildet. Die Material-Mischung kann zu einem Großteil aus Zellulose bestehen. Es ist weiterhin denkbar, dass die Material-Mischung zumindest teilweise aus Holzfasern besteht.

Alternativ zu einer Ausgestaltung des Grundkörpers aus dem Gelatinegemisch und der Lignin-Mischung ist denkbar, dass der Grundkörper vorzugsweise zumindest größtenteils, insbesondere zumindest im Wesentlichen vollständig, aus einem Biokunststoff, wie bevorzugt Polylactid (PLA) oder Polyhydroxybutyrat (PHB), besteht. Es sind auch Biokunststoff-Blends oder ein Material auf Stärkebasis denkbar. Es ist denkbar, dass die Pflanzenschutzvorrichtung zumindest eine Schutzschicht und/oder zumindest eine Farbschicht aufweist, die an dem Grundkörper angeordnet ist, insbesondere den Grundkörper überzieht. Insbesondere sind/ist die Schutzschicht und/oder die Farbschicht, insbesondere jeweils, aus einem vollständig, insbesondere rückstandslos, biologisch abbaubaren Material ausgebildet. Es ist denkbar, dass die Schutzschicht und/oder die Farbschicht dazu vorgesehen sind/ist, eine Verwitterung des Grundkörpers zu verzögern. Bevorzugt ist der Grundkörper zumindest im Wesentlichen vollständig mit der Schutzschicht und/oder der Farbschicht überzogen und/oder bedeckt. Beispielsweise sind/ist die Schutzschicht und/oder die Farbschicht aus einem Naturharz oder einem natürlichen, insbesondere pflanzlichen, Öl ausgebildet.

Zudem wird vorgeschlagen, dass die Pflanzenschutzvorrichtung zumindest ein Hüllelement umfasst, das an dem Grundkörper angeordnet ist, wobei das zumindest eine Hüllelement dazu vorgesehen ist, die Durchführung entlang einer Mittelachse des Grundkörpers betrachtet zumindest teilweise, insbesondere zumindest größtenteils, bevorzugt zumindest im Wesentlichen vollständig, zu umschließen, wobei das zumindest eine Hüllelement aus einem vollständig, insbesondere rückstandslos, biologisch abbaubaren Material ausgebildet ist. Es kann eine vorteilhaft hohe Dämmwirkung ermöglicht werden. Es kann bedarfsweise ein vorteilhaft hoher Schutz vor Schädlingen ermöglicht werden. Durch das Hüllelement kann ein Teil einer Schutzwirkung der Pflanzenschutzvorrichtung von dem Grundkörper übernommen werden, wodurch der Grundkörper weniger dicht ausgebildet werden kann und zusätzlich eine Stützfunktion zu einem Halten des Hüllelements übernimmt. Vorzugsweise ist das Hüllelement an dem Grundkörper befestigt und/oder ist form- und/oder kraftschlüssig mit dem Grundkörper verbunden. Vorzugsweise ist das Hüllelement mit dem Grundkörper verwoben, insbesondere über eine Mehrzahl von einzelnen Streben. Insbesondere bildet der Grundkörper eine Mehrzahl von Haltefortsätzen aus, die dazu vorgesehen sind, das Hüllelement an dem Grundkörper zu halten und/oder zu fixieren. Alternativ oder zusätzlich ist denkbar, dass das Hüllelement stoffschlüssig mit dem Grundkörper verbunden ist, beispielsweise über eine Klebeverbindung. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben, Verschmelzen und/oder Vulkanisieren. In einer bevorzugten Ausgestaltung umfasst die Pflanzenschutzvorrichtung ein einstückig ausgebildetes Hüllelement, welches insbesondere dazu vorgesehen ist, die Durchführung entlang der Mittelachse des Grundkörpers betrachtet zumindest im Wesentlichen vollständig zu umschließen. Bevorzugt erstreckt sich das Hüllelement zumindest im Wesentlichen vollständig über die maximale Längserstreckung der Pflanzenschutzvorrichtung und/oder des Grundkörpers. Alternativ ist denkbar, dass die Pflanzenschutzvorrichtung eine Mehrzahl von Hüllelementen umfasst, welche dazu vorgesehen sind, die Durchführung in einem aneinander angeordneten Zustand zusammen zumindest im Wesentlichen vollständig zu umschließen. Insbesondere bei einer Ausgestaltung der Pflanzenschutzvorrichtung mit mehr als einem Grundkörper, entspricht eine Anzahl an Hüllelementen vorzugsweise zumindest einer Anzahl an Grundkörpern. Insbesondere ist denkbar, dass die Pflanzenschutzvorrichtung für jeden Grundkörper genau ein Hüllelement umfasst, welches sich insbesondere zumindest im Wesentlichen vollständig über eine gesamte Außen- bzw. Innenfläche des jeweiligen Grundkörpers erstreckt. Insbesondere ist das Hüllelement als ein zumindest größtenteils flexibles Flächengebilde ausgebildet, wobei insbesondere eine maximale Länge und eine maximale Breite des Hüllelements wesentlich größer, insbesondere mindestens 10 mal größer, vorzugsweise mindestens 15 mal größer und besonders bevorzugt mindestens 20 mal größer, ausgebildet sind wie eine maximale Dicke des Hüllelements. Bevorzugt ist das Hüllelement zumindest größtenteils formflexibel ausgebildet. Insbesondere ist das Hüllelement als eine Matte oder eine Platte ausgebildet.

Ferner wird vorgeschlagen, dass der Grundkörper dazu vorgesehen ist, das zumindest eine Hüllelement an einer der Durchführung zugewandten Innenseite und an einer der Durchführung abgewandten Außenseite des Hüllelements abzustützen. Es kann eine vorteilhaft hohe Robustheit und Stabilität der Pflanzenschutzvorrichtung erreicht werden. Dadurch können ungewollte Beschädigungen der Pflanzenschutzvorrichtung, insbesondere des Hüllelements, beim Transport und/oder beim Aufstellen vorteilhaft verhindert werden. Vorzugsweise sind vom Grundkörper ausgebildete Streben über die Innenseite des Hüllelements an dem Hüllelement angeordnet und weitere vom Grundkörper ausgebildete Streben über die Außenseite des Hüllelements an dem Hüllelement angeordnet. Bevorzugt erstrecken sich vom Grundkörper ausgebildete Streben, insbesondere die Streben, die weiteren Streben oder andere vom Grundkörper ausgebildete Streben, zumindest teilweise von der Außenseite des Hüllelements zu der Innenseite des Hüllelements durch das Hüllelement hindurch. Alternativ oder zusätzlich ist denkbar, dass der Grundkörper, insbesondere in entlang der maximalen Längserstreckung des Grundkörpers ausgebildeten Endbereichen des Grundkörpers, Streben ausbildet, welche dazu vorgesehen sind, das Hüllelement an zumindest einer Seitenkante des Hüllelements zumindest teilweise zu umgreifen.

Des Weiteren wird vorgeschlagen, dass das zumindest eine Hüllelement zumindest größtenteils aus einem Vliesstoff besteht. Es kann eine vorteilhaft einfache und kostengünstige Herstellung des Hüllelements erreicht werden. Es kann eine vorteilhaft einfache Handhabung des Hüllelements beim Transport und/oder beim Aufstellen der Pflanzenschutzvorrichtung erreicht werden. Das Hüllelement kann vorteilhaft einfach mit einer beliebigen Dicke ausgebildet werden. Es kann eine vorteilhaft einfache Anpassung von Eigenschaften des Hüllelements an spezifische Anforderungen einer Umgebung und/oder spezifische Anwendungen, wie beispielsweise Anforderungen von speziellen zu schützenden Pflanzenarten, ermöglicht werden. Unter einem "Vliesstoff" soll insbesondere ein textiles Gebilde aus Fasern begrenzter Länge, Endlosfasern oder geschnittenen Garnen jeglicher Art und jeglichen Ursprungs verstanden werden, die auf irgendeine Weise zu einem Vlies zusammengefügt und auf irgendeine Weise miteinander verbunden worden sind, wobei ein Verkreuzen bzw. Verschlingen von Fasern oder Garnen, wie es beim Weben, Wirken, Stricken, der Spitzenherstellung, dem Flechten und Herstellung von getufteten Erzeugnissen geschieht, ausgeschlossen ist. Insbesondere ist der Vliesstoff verschieden von einem Gestrick, einem Gewirk o.dgl. ausgebildet. Insbesondere ist der Vliesstoff verschieden von einer Folie und/oder einem Papier ausgebildet. Vorzugsweise ist der Vliesstoff frei von einem Fadensystem und einer Maschenbildung ausgebildet, wie sie beispielsweise beim Weben, Wirken, Stricken, Häkeln o.dgl. entstehen.

Zudem wird vorgeschlagen, dass der Vliesstoff aus tierischer Wolle, insbesondere Schafswolle, ausgebildet ist. Es kann ein vorteilhaft kostengünstiges und schnell herzustellendes Hüllelement ermöglicht werden. Insbesondere durch einen Vliesstoff aus Schafswolle kann ein vorteilhaft kostengünstiges Hüllelement bereitgestellt werden. Insbesondere kann ein aus tierischer Wolle ausgebildetes Hüllelement vorteilhaft einfach durch Tiere oder andere Organismen, wie Pilze o.dgl., wiederverwertet werden. Es ist denkbar, dass der Vliesstoff aus einer Mischung aus verschiedenen Arten von tierischer Wolle ausgebildet ist. Besonders bevorzugt ist das Hüllelement, insbesondere der Vliesstoff, zumindest im Wesentlichen vollständig aus Schafswolle ausgebildet. Dadurch können vorteilhaft geringe Herstellungskosten der Pflanzenschutzvorrichtung mit Hüllelement, insbesondere des Hüllelements, erreicht werden. Insbesondere ist der Vliesstoff als Faserflor ausgebildet. Es ist denkbar, dass das Hüllelement aus einem Hauptteil, welcher zumindest größtenteils aus dem Vliesstoff besteht, und zumindest einer Naht o.dgl. ausgebildet ist, welche beispielsweise an einem äußeren Randbereich des Hauptteils und/oder an Ausnehmungen des Hüllelements begrenzenden Innenseiten des Hüllelements angeordnet ist. Vorzugsweise ist die zumindest eine Naht aus einem vollständig, insbesondere rückstandslos, biologisch abbaubaren Material ausgebildet.

Ferner wird vorgeschlagen, dass der Vliesstoff aus pflanzlichen Fasern, insbesondere Baumwollfasern, ausgebildet ist. Es kann vorteilhaft einfach ein vollständig biologisch abbaubares Hüllelement erreicht werden. Insbesondere kann ein aus pflanzlichen Fasern ausgebildetes Hüllelement vorteilhaft einfach durch Tiere wiederverwertet werden. Es ist denkbar, dass der Vliesstoff aus einer Mischung aus verschiedenen Arten von pflanzlichen Fasern ausgebildet ist. In einer bevorzugten Ausgestaltung ist das Hüllelement, insbesondere der Vliesstoff, zumindest im Wesentlichen vollständig aus Baumwollfasern ausgebildet. Alternativ ist denkbar, dass der Vliesstoff aus Hanffasern, Kokosfasern o.dgl. ausgebildet ist.

Es ist denkbar, dass die Pflanzenschutzvorrichtung zumindest eine Schutzschicht für eine Anordnung am Hüllelement umfasst. Bevorzugt ist die Schutzschicht für das Hüllelement flächig auf dem Vliesstoff angeordnet, vorzugsweise an den zwei Hauptoberflächen des Vliesstoffes. Besonders bevorzugt ist die Schutzschicht für das Hüllelement aus einem vollständig, insbesondere rückstandslos, biologisch abbaubaren Material ausgebildet, beispielsweise einer Lignin-Mischung, einem Gelatinegemisch, PLA, PHB o.dgl. Vorzugsweise ist die Schutzschicht für das Hüllelement form- und/oder kraftschlüssig und/oder stoffschlüssig mit dem Vliesstoff verbunden. Bevorzugt ist die Schutzschicht für das Hüllelement mit dem Vliesstoff vernäht, verwoben und/oder verschweißt. Es ist denkbar, dass die Schutzschicht für das Hüllelement von zwei Seiten jeweils über Verbindungspunkte oder Verbindungsnähte verschweißt ist und den Vliesstoff umschließt. Beispielsweise ist die Schutzschicht für das Hüllelement als eine Folie ausgebildet. Alternativ ist denkbar, dass die Schutzschicht für das Hüllelements aus einem natürlichen, insbesondere pflanzlichen, Öl ausgebildet ist.

Des Weiteren wird vorgeschlagen, dass das zumindest eine Hüllelement eine Mehrzahl von Licht- und/oder Belüftungsausnehmungen begrenzt. Es kann eine Verdeckung der zu schützenden Pflanze durch das Hüllelement vorteilhaft einfach auf optimale Wachstumsbedingungen der jeweiligen Pflanze angepasst werden. Vorzugsweise erstrecken sich die Licht- und/oder Belüftungsausnehmungen jeweils von der Außenseite des Hüllelements bis zur Innenseite des Hüllelements. Insbesondere erstrecken sich die Licht- und/oder Belüftungsausnehmungen jeweils über die maximale Dicke des Hüllelements. Bevorzugt beträgt die mittlere Dicke des Hüllelements höchstens 1,5 cm, vorzugsweise höchstens 1 cm, besonders bevorzugt höchstens 0,5 cm und ganz besonders bevorzugt höchstens 0,2 cm. Vorzugsweise ist die Mehrzahl der Licht- und/oder Belüftungsausnehmungen über eine Hauptoberfläche des Hüllelements und/oder in eine Umfangrichtung um die Mittelachse des Grundkörpers gleichmäßig verteilt angeordnet. Unter einer "Hauptoberfläche" eines Körpers, insbesondere des Hüllelements, soll insbesondere eine größte zusammenhängende Oberfläche des Körpers verstanden werden. Die Hauptoberfläche des Hüllelements ist dem Betriebszustand zum Schutz der Pflanze, in dem insbesondere das Hüllelement die Durchführung umschließt, mantelförmig, insbesondere je nach Form des Grundkörpers, zylindermantelförmig, quadermantelförmig o.dgl., um die Durchführung ausgebildet. Vorzugsweise ist das Hüllelement zumindest im Bereich des sichtbaren Lichts und/oder unter natürlichen Lichtverhältnissen undurchsichtig ausgebildet. Insbesondere sind die Licht- und/oder Belüftungsausnehmungen dazu vorgesehen, eine zumindest teilweise Beleuchtung der zu schützenden Pflanze und/oder eine Luftzirkulation innerhalb der Durchführung zu ermöglichen. Insbesondere weisen die Belüftungsausnehmungen einen minimalen Durchmesser von mindestens 0,5 cm, vorzugsweise mindestens 1 cm und besonders bevorzugt mindestens 1,5 cm, auf. Es ist denkbar, dass die Licht- und/oder Belüftungsausnehmungen überwiegend oder ausschließlich in einem oberen Endbereich der Pflanzenschutzvorrichtung angeordnet sind, welcher insbesondere in einem montierten Zustand der Pflanzenschutzvorrichtung zu einer dem Untergrund abgewandten Anordnung vorgesehen ist. Es ist denkbar, dass sich der Grundkörper zumindest teilweise durch Licht- und/oder Belüftungsausnehmungen des Hüllelements hindurch erstreckt, bevorzugt zu einem Abstützen und/oder Halten des Hüllelements. Vorzugsweise erstrecken sich die Licht- und/oder Belüftungsausnehmungen zumindest im Wesentlichen vollständig durch den Vliesstoff. Insbesondere in einer Ausgestaltung des Hüllelements mit einer Schutzschicht, erstrecken sich die Licht- und/oder Belüftungsausnehmungen durch den Vliesstoff und die Schutzschicht(en). Alternativ ist denkbar, dass das Hüllelement zumindest teilweise durchsichtig ausgebildet ist. Dadurch kann vorteilhaft eine Ausgestaltung des Hüllelements mit Licht- und/oder Belüftungsausnehmungen entfallen. Insbesondere in einer zumindest teilweise durchsichtigen und/oder ausnehmungsfreien Ausgestaltung des Hüllelements, beträgt eine mittlere Dicke des Hüllelements höchstens 0,5 cm, vorzugsweise höchstens 0,25 cm, besonders bevorzugt höchstens 0,15 cm und ganz besonders bevorzugt höchstens 0,1 cm.

Zudem wird vorgeschlagen, dass der Grundkörper zumindest zwei Skelettstrukturlagen umfasst, die, insbesondere in zumindest einem Betriebszustand zum Schutz zumindest einer Pflanze, jeweils die Durchführung zumindest teilweise umschließen und die einstückig miteinander verbunden sind, wobei die zumindest zwei Skelettstrukturlagen radial zu einer Mittelachse des Grundkörpers hin verschiedene Abstände zur Mittelachse des Grundkörpers aufweisen. Es kann ein vorteilhaft stabiler Grundkörper ermöglicht werden. Insbesondere kann eine Stärke der Pflanzenschutzvorrichtung zum Schutz der zu schützenden Pflanze vorteilhaft unabhängig von weiteren Bauteilen erreicht werden. Unter einer "Skelettstrukturlage" soll insbesondere eine geometrische Anordnung von Elementen bzw. Streben des Grundkörpers auf einer gedachten dreidimensionalen Fläche verstanden werden, wobei mindestens 20 Vol.-%, vorzugsweise mindestens 30 Vol.-% und besonders bevorzugt mindestens 40 Vol.-%, des Grundkörpers, insbesondere aller Elemente bzw. Streben des Grundkörpers, auf der gedachten dreidimensionalen Fläche angeordnet sind und wobei sich die gedachten dreidimensionalen Fläche zumindest im Wesentlichen vollständig über eine Hauptoberfläche des Grundkörpers erstreckt. Insbesondere sind die zumindest zwei Skelettstrukturlagen des Grundkörpers zumindest im Wesentlichen parallel zueinander angeordnet. Bevorzugt sind die zumindest zwei Skelettstrukturlagen des Grundkörpers über zwischen den zwei Skelettstrukturlagen angeordneten Elementen bzw. Streben des Grundkörpers miteinander verbunden. Vorzugsweise sind die Skelettstrukturlagen, insbesondere in einem montierten Zustand der Pflanzenschutzvorrichtung, jeweils zylindermantelflächenförmig oder quadermantelflächenförmig ausgebildet, insbesondere um die Mittelachse des Grundkörpers. Bevorzugt umschließen die Skelettstrukturlagen, insbesondere in zumindest einem Betriebszustand zum Schutz zumindest einer Pflanze, jeweils die Durchführung zumindest größtenteils. Vorzugsweise umschließen die Skelettstrukturlagen, insbesondere in zumindest einem Betriebszustand zum Schutz zumindest einer Pflanze, jeweils die Durchführung entlang der Mittelachse des Grundkörpers zumindest im Wesentlichen vollständig. Bevorzugt erstrecken sich die Skelettstrukturlagen jeweils zumindest im Wesentlichen vollständig über die maximale Längserstreckung des Grundkörpers.

Ferner wird vorgeschlagen, dass die Streben, insbesondere in zumindest einem Betriebszustand zum Schutz einer Pflanze, entlang einer Umfangsrichtung um eine Mittelachse des Grundkörpers betrachtet jeweils zumindest im Wesentlichen geradlinig ausgebildet sind. Es kann eine vorteilhaft hohe Stabilität des Grundkörpers erreicht werden. Es kann ein vorteilhaft ansprechendes optisches Erscheinungsbild der Pflanzenschutzvorrichtung ermöglicht werden. Vorzugsweise ist zumindest ein Großteil der den Grundkörper ausbildenden Streben jeweils entlang einer Umfangsrichtung um die Mittelachse des Grundkörpers betrachtet zumindest im Wesentlichen geradlinig ausgebildet. Insbesondere sind die Skelettstrukturlagen des Grundkörpers ausbildende Streben des Grundkörpers jeweils entlang einer Umfangsrichtung um die Mittelachse des Grundkörpers betrachtet zumindest im Wesentlichen geradlinig ausgebildet, wobei insbesondere von den Skelettstrukturlagen getrennt ausgebildete Streben des Grundkörpers auch gebogen, krumm o.dgl. ausgebildet sein können. Insbesondere bei einer Ausgestaltung des Grundkörpers mit genau einer Skelettstrukturlage ist denkbar, dass vorzugsweise zumindest im Wesentlichen alle der den Grundkörper ausbildenden Streben jeweils entlang einer Umfangsrichtung um die Mittelachse des Grundkörpers betrachtet zumindest im Wesentlichen geradlinig ausgebildet sind.

Des Weiteren wird vorgeschlagen, dass der Grundkörper zumindest ein Befestigungsmittel zu einer Fixierung des Grundkörpers in zumindest einem Betriebszustand zum Schutz einer Pflanze und/oder zu einer Befestigung der Pflanzenschutzvorrichtung an einem Stützelement und/oder einer Pflanze ausbildet, wobei insbesondere der fixierte Grundkörper die Durchführung hülsenartig umschließt. Es können zusätzliche separate Befestigungsmittel der Pflanzenschutzvorrichtung vorteilhaft entfallen. Es kann eine vorteilhaft geringe Anzahl von unterschiedlichen Bauteilen der Pflanzenschutzvorrichtung erreicht werden. Dadurch können vorteilhaft geringe Herstellungs- und Montagekosten ermöglicht werden. Zusätzlich kann eine vorteilhaft schnelle Montage der Pflanzenschutzvorrichtung erreicht werden. Vorzugsweise ist das Befestigungsmittel als eine Strebe des Grundkörpers ausgebildet, die vorzugsweise hakenförmig, schlaufenförmig, stiftförmig o.dgl. ausgebildet ist. Es ist denkbar, dass das Befestigungsmittel dazu vorgesehen ist, den Grundkörper in zumindest einer Stellung des Grundkörpers für den Betriebszustand zum Schutz einer Pflanze zu halten, insbesondere in einer Anordnung um die Durchführung. Es ist denkbar, dass der Grundkörper zumindest ein weiteres Befestigungsmittel ausbildet, welches dazu vorgesehen ist, zur Fixierung des Grundkörpers und/oder zur Befestigung der Pflanzenschutzvorrichtung an dem Stützelement und/oder der Pflanze mit dem Befestigungsmittel zusammenzuwirken. Vorzugsweise ist das andere Befestigungsmittel korrespondierend zu dem Befestigungsmittel ausgebildet. Bevorzugt ist das andere Befestigungsmittel als eine Strebe des Grundkörpers ausgebildet, die vorzugsweise hakenförmig, schlaufenförmig, stiftförmig o.dgl. ausgebildet ist. Beispielsweise ist das Befestigungsmittel als ein hakenförmiger Fortsatz am Grundkörper ausgebildet und dazu vorgesehen, zur Fixierung des Grundkörpers und/oder zur Befestigung der Pflanzenschutzvorrichtung an dem Stützelement und/oder der Pflanze mit einer anderen Strebe des Grundkörpers und/oder mit einem als Öse oder Schlaufe ausgebildeten anderen Befestigungsmittel zusammenzuwirken. Bevorzugt ist das Befestigungsmittel an einem äußeren Randbereich des Grundkörpers angeordnet. Insbesondere ist das andere Befestigungsmittel an einem von dem äußeren Randbereich abgewandten und/oder gegenüberliegenden anderen Randbereich des Grundkörpers angeordnet. Bevorzugt sind das Befestigungsmittel und das andere Befestigungsmittel an entlang einer Umfangrichtung um die Mittelachse des Grundkörpers ausgebildeten voneinander beabstandeten Endbereichen des Grundkörpers angeordnet. Es ist denkbar, dass der Grundkörper eine Mehrzahl von Befestigungsmitteln ausbildet, die bevorzugt über die maximale Längserstreckung des Grundkörpers, insbesondere gleichmäßig, verteilt angeordnet sind. Zusätzlich ist denkbar, dass der Grundkörper eine Mehrzahl von anderen Befestigungsmitteln ausbildet, die bevorzugt über die maximale Längserstreckung des Grundkörpers, insbesondere gleichmäßig, verteilt angeordnet sind, vorzugsweise korrespondierend zu einer Anordnung der Befestigungsmittel.

Zudem wird ein Verfahren zur Herstellung einer erfindungsgemäßen Pflanzenschutzvorrichtung vorgeschlagen. Vorzugsweise wird in zumindest einem Verfahrensschritt der Grundkörper hergestellt, wobei insbesondere der Grundkörper an einem Stück hergestellt wird.

Durch die erfindungsgemäße Ausgestaltung des Verfahrens kann eine vorteilhaft hohe Stabilität der vollständig biologisch abbaubaren Pflanzenschutzvorrichtung erreicht werden. Es können vorteilhaft geringe Herstellungskosten ermöglicht werden.

Des Weiteren wird vorgeschlagen, dass in zumindest einem Verfahrensschritt der Grundkörper durch ein Extrusionsverfahren aus dem vollständig, insbesondere rückstandslos, biologisch abbaubaren Material hergestellt wird. Vorzugsweise werden in dem zumindest einen Verfahrensschritt, insbesondere in einem ersten Verfahrensschritt, Streben des Grundkörpers aus dem vollständig, insbesondere rückstandslos, biologisch abbaubaren Material extrudiert. Die Streben werden, insbesondere nach einer Extrusion, vorzugsweise in einem zweiten Verfahrensschritt, auf einem, insbesondere sich drehenden, Extrusionskörper in einer definierten Form abgelegt, um eine Skelettstruktur zu bilden. Der Extrusionskörper kann mit einem Vlies bestückt sein, auf welches die Streben aufgebracht werden. Die Streben werden, insbesondere in unterschiedlichen Ebenen, übereinandergelegt und bilden, insbesondere zwischen den Ebenen, Verbindungspunkte aus. In den Verbindungspunkten kreuzen sich jeweils Abschnitte der Streben und sind in diesem Punkt stoffschlüssig verbunden. Die Streben werden insbesondere gitterförmig auf den Extrusionskörper aufgebracht und bilden eine Skelettstruktur aus. Vorzugsweise ist der ausgebildete Grundkörper zylindrisch, insbesondere kreiszylindrisch, ausgebildet. Es sind jedoch auch andere, einem Fachmann als sinnvoll erscheinende Formen denkbar. Es kann eine vorteilhaft schnelle und kostengünstige Herstellung des Grundkörpers erreicht werden. Insbesondere kann eine Herstellung des Grundkörpers an einem Stück erreicht werden. Es ist denkbar, dass der Grundkörper schichtweise hergestellt wird, ähnlich einem 3D-Druck-Verfahren.

Ferner wird vorgeschlagen, dass in zumindest einem Verfahrensschritt der Grundkörper derart hergestellt wird, dass der Grundkörper in einem unbelasteten Zustand, insbesondere entlang einer Mittelachse des Grundkörpers betrachtet, eine gebogene und/oder angewinkelte Grundform aufweist. Es können weitere Verfahrensschritte zu einer Formgebung des Grundkörpers vorteilhaft entfallen. Insbesondere kann vorteilhaft eine Herstellung des Grundkörpers in nur einem Verfahrensschritt ermöglicht werden. Insbesondere wird bei der Herstellung des Grundkörpers das Material des Grundkörpers auf einen vorgeformten, insbesondere runden oder eckigen, Extruderkörper aufgebracht, wobei insbesondere der Grundkörper mit der gebogenen und/oder angewinkelten Grundform aushärtet. Alternativ ist denkbar, dass der Grundkörper derart hergestellt wird, dass der Grundkörper in einem unbelasteten Zustand eine plattenförmige und/oder ebene Grundform aufweist. Insbesondere wird der Grundkörper in zumindest einem weiteren Verfahrensschritt des Verfahrens zur Herstellung der Pflanzenschutzvorrichtung oder bei einer Montage zum Schutz einer Pflanze derart angeordnet, dass der Grundkörper die Durchführung zumindest teilweise, insbesondere zumindest größtenteils, vorzugsweise entlang der Mittelachse betrachtet zumindest im Wesentlichen vollständig, umschließt.

Zudem wird vorgeschlagen, dass in zumindest einem Verfahrensschritt der Grundkörper bei einem Herstellen des Grundkörpers direkt auf und/oder an einem Hüllelement ausgebildet wird. Es kann eine vorteilhaft schnelle und kostengünstige Herstellung der Pflanzenschutzvorrichtung, insbesondere aus Hüllelement(en) und Grundkörper(n), ermöglicht werden. Es kann vorteilhaft eine stoffschlüssige Verbindung des Grundkörpers mit dem Hüllelement bei einer Ausformung des Grundkörpers ermöglicht werden, wobei insbesondere weitere Verfahrensschritte zu einer Verbindung des Grundkörpers und des Hüllelements vorteilhaft entfallen können. Bevorzugt wird der Grundkörper bei dem Extrusionsverfahren direkt auf das Hüllelement aufgebracht. Bevorzugt erfolgt eine Aushärtung des Materials des Grundkörpers auf und/oder an dem Hüllelement. Es ist denkbar, dass der Grundkörper bei der Herstellung, insbesondere bei dem Extrusionsverfahren, form- und/oder kraftschlüssig und/oder stoffschlüssig mit dem Hüllelement verbunden wird.

Des Weiteren wird vorgeschlagen, dass zumindest in einem Verfahrensschritt der Grundkörper durch ein diskontinuierliches Extrusionsverfahren hergestellt wird. Die Streben werden vorzugsweise extrudiert und auf den Extrusionskörper gelegt. Der Extrusionskörper kann vorher mit einem Vliesstoff ummantelt werden. Nach der Ausbildung des Grundkörpers auf dem Extrusionskörper wird der Extrusionsprozess insbesondere angehalten. Der Grundkörper wird insbesondere von dem Extrusionskörper genommen. Ein weiterer Fertigungsvorgang wird anschließend wieder gestartet, um einen weiteren Grundkörper herzustellen. Es wird ein Grundkörper nach dem anderen produziert. Das diskontinuierliche Extrusionsverfahren weist daher insbesondere Unterbrechungen auf. Vorzugsweise wird die Extrusion der Streben nach der Ausbildung des Grundkörpers unterbrochen, um den fertigen Grundkörper zu entnehmen und den Extrusionskörper neu zu bestücken. Die Extrusion der Streben wird fortgesetzt, um einen weiteren Grundkörper auszubilden. Dadurch kann insbesondere eine stückgenaue Produktion ermöglicht werden. Es können insbesondere für jeden Grundkörper unterschiedliche skelettartige Strukturen realisiert werden, um Kundenanforderungen oder Sonderanwendungen umzusetzen.

Zudem wird vorgeschlagen, dass zumindest in einem Verfahrensschritt zur Herstellung des Grundkörpers mittels einer Mehrzahl an Extrusionsauslassöffnungen gleichzeitig eine Vielzahl von Streben ausgeformt werden. Vorzugsweise ist eine spezielle Vorrichtung zu einer Durchführung des Extrusionsverfahrens zur Herstellung des Grundkörpers vorgesehen, wobei die Vorrichtung insbesondere die Mehrzahl von Extrusionsauslassöffnungen aufweist, welche vorzugsweise in einer Reihe parallel zu einer Rotationsachse des Extrusionskörpers angeordnet sind. Die Mehrzahl an Extrusionsauslassöffnungen extrudieren insbesondere gleichzeitig die Streben und bilden den Grundkörper aus. Es werden insbesondere mehrere Streben gleichzeitig extrudiert. Es ist denkbar, dass die Extrusionsauslassöffnungen den gleichen Abstand zueinander haben oder die Abstände der Extrusionsauslassöffnungen zueinander verschieden sein können. Die Streben können durch die Mehrzahl an Extrusionsauslassöffnungen auch in unterschiedlichen Ebenen gelegt werden, die den Grundkörper bilden. Durch diese Auslegung kann vorteilhaft eine höhere Produktionsrate realisiert werden.

Ferner wird vorgeschlagen, dass zumindest in einem Verfahrensschritt der Grundkörper bei einem Herstellen des Grundkörpers auf einen zylinderförmigen Extrusionskörper ausgebildet wird. Für den Extrusionskörper sind auch andere Formen denkbar. Die Form des Extrusionskörpers bestimmt die Form des Grundkörpers. Der Extrusionskörper kann drehbar gelagert sein. Der Extrusionskörper kann beweglich in alle Richtungen gelagert sein. Es ist denkbar, dass der Extrusionskörper noch weitere Walzen oder Anbauteile enthält. Vorteilhaft ist dadurch eine einfache und effiziente Maschinenanordnung zu realisieren. Ein weiterer Vorteil ist die gewünschte Grundform des Grundkörpers.

Die erfindungsgemäße Pflanzenschutzvorrichtung und/oder das erfindungsgemäße Verfahren sollen/soll hierbei nicht auf die oben beschriebene Anwendung und Ausführungsform beschränkt sein. Insbesondere können/kann die erfindungsgemäße Pflanzenschutzvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht einer erfindungsgemäßen Pflanzenschutzvorrichtung zum Schutz eines Baumes mit einem als eine Skelettstruktur ausgebildeten Grundkörper in einem an dem Baum angeordneten Zustand,
- Fig. 2: eine schematische Schnittansicht der erfindungsgemäßen Pflanzenschutzvorrichtung in dem an dem Baum angeordneten Zustand,
- Fig. 3: eine schematische Darstellung eines beispielhaften Ablaufs eines erfindungsgemäßen Verfahrens zur Herstellung der erfindungsgemäßen Pflanzenschutzvorrichtung,
- Fig. 4: eine schematische Seitenansicht eines Extrusionsverfahrens zur Herstellung des Grundkörpers der erfindungsgemäßen Pflanzenschutzvorrichtung,
- Fig. 5: eine schematische Detailansicht einer ersten alternativen Ausgestaltung einer erfindungsgemäßen Pflanzenschutzvorrichtung im Bereich eines Grundkörpers und eines Hüllelements mit Licht- und/oder Belüftungsausnehmungen,
- Fig. 6: eine schematische Detailansicht einer zweiten alternativen Ausgestaltung einer erfindungsgemäßen Pflanzenschutzvorrichtung mit einem Hüllelement und einem das Hüllelement an einer Innenseite und an einer Außenseite abstützenden Grundkörper,
- Fig. 7: eine schematische Seitenansicht einer dritten alternativen Ausgestaltung einer erfindungsgemäßen Pflanzenschutzvorrichtung mit einem aus zumindest im Wesentlichen geradlinigen Streben ausgebildeten Grundkörper,
- Fig. 8: eine schematische Draufsicht einer vierten alternativen Ausgestaltung einer erfindungsgemäßen Pflanzenschutzvorrichtung mit einem Grundkörper, der zwei Befestigungsmittel zu einer Fixierung des Grundkörpers und zu einer Befestigung der Pflanzenschutzvorrichtung über ein Stützelement ausbildet und
- Fig. 9: eine schematische Draufsicht einer fünften alternativen Ausgestaltung einer erfindungsgemäßen Pflanzenschutzvorrichtung mit zwei Grundkörpern, die zum Schutz einer Pflanze zusammen eine Durchführung begrenzen.

### Beschreibung der Ausführungsbeispiele

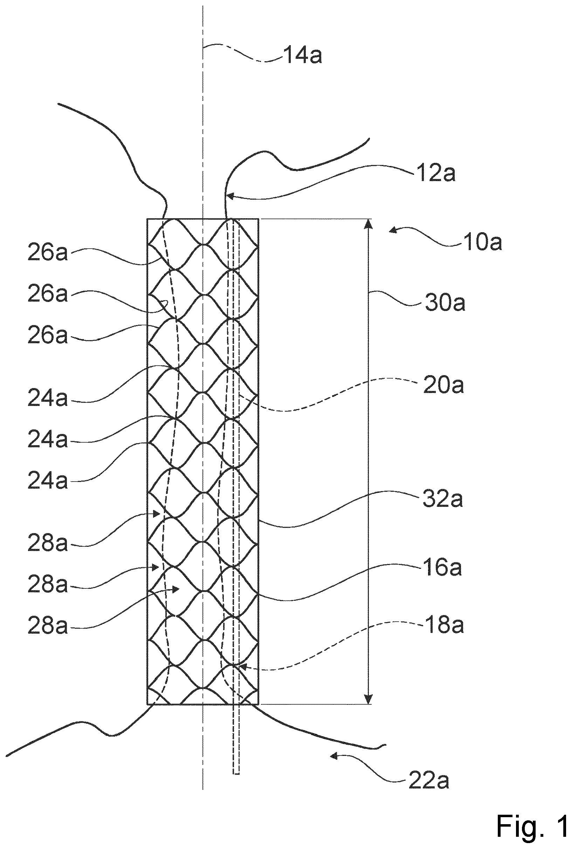

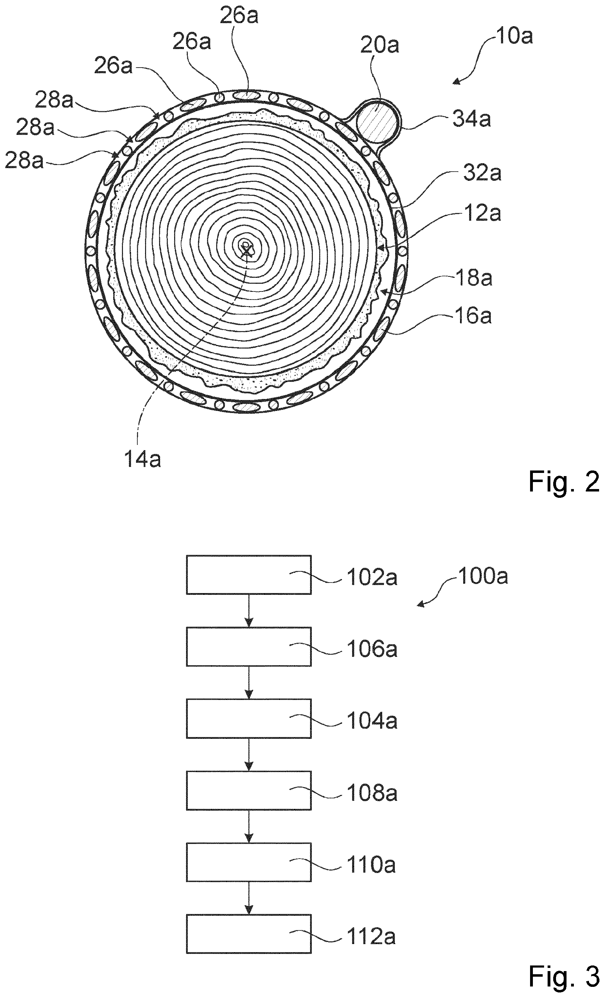

In Figur 1 ist eine schematische Seitenansicht einer Pflanzenschutzvorrichtung 10a in einem montierten Zustand zum Schutz einer als ein Baum ausgebildeten Pflanze 12a gezeigt. In Figur 2 ist die Pflanzenschutzvorrichtung 10a in einer schematischen Schnittansicht gezeigt, wobei eine Schnittebene zumindest im Wesentlichen senkrecht zu einer Mittelachse 14a eines Grundkörpers 16a der Pflanzenschutzvorrichtung 10a angeordnet ist. Die Pflanzenschutzvorrichtung 10a ist insbesondere als ein Verbiss- und/oder Fegeschutz für die Pflanze 12a, insbesondere Baum, insbesondere Streuobstbaum, Setzling und/oder Strauch, insbesondere Weinrebe, ausgebildet. Die Pflanzenschutzvorrichtung 10a umfasst den einstückig ausgebildeten Grundkörper 16a, welcher dazu vorgesehen ist, insbesondere zum Schutz der Pflanze 12a, zumindest eine Durchführung 18a zumindest größtenteils zu umschließen. Der Grundkörper 16a ist dazu vorgesehen, die Durchführung 18a entlang der Mittelachse 14a des Grundkörpers 16a betrachtet zumindest im Wesentlichen vollständig zu umschließen (vgl. Figur 2). Die Pflanzenschutzvorrichtung 10a umfasst ein Stützelement 20a zu einer Befestigung des Grundkörpers 16a an einem Untergrund 22a. Das Stützelement 20a ist als ein Holzpfahl ausgebildet. Der Grundkörper 16a und das Stützelement 20a sind jeweils aus einem vollständig, insbesondere rückstandslos, biologisch abbaubaren Material ausgebildet. Der Grundkörper 16a und das Stützelement 20a besteht aus Streben 26a, die insbesondere aus einem vollständig, insbesondere rückstandslos, biologisch abbaubaren Material extrudiert und aufeinandergelegt sind. Der Grundkörper 16a besteht zumindest größtenteils aus einer Lignin-Mischung, die insbesondere ein Duroplast bildet. Der Grundkörper 16a besteht zumindest größtenteils aus einer Material-Mischung, welche Polybutylenadipatterephthalat (PBAT), Polylactide (PLA) und Lignin umfasst. Die Material-Mischung bildet die Lignin-Mischung aus. Alternativ wäre auch denkbar, dass der Grundkörper 16a zumindest größtenteils aus einer Material-Mischung besteht, welche Polybutylenadipatterephthalat (PBAT), Polylactide (PLA) und Zellulose oder Holzfasern umfasst. Insbesondere ist der Grundkörper 16a zumindest im Wesentlichen vollständig aus der Lignin-Mischung ausgebildet. Alternativ ist denkbar, dass der Grundkörper 16a aus einem anderen vollständig, insbesondere rückstandslos, biologisch abbaubaren Material ausgebildet ist, wie vorzugsweise einem Gelatinegemisch, PHB, PLA. Es sind auch andere Ausgestaltungen des Grundkörpers 16a denkbar.

Der Grundkörper 16a ist als eine Skelettstruktur ausgebildet. Der Grundkörper 16a ist aus einer Vielzahl von über Verbindungspunkte 24a einstückig miteinander ausgebildeter Streben 26a gebildet, welche von einer Außenseite des Grundkörpers 16a zu einer der Durchführung 18a zugewandten Innenseite des Grundkörpers 16a hin eine Vielzahl von Ausnehmungen 28a begrenzen. Der Grundkörper 16a ist durch ein Extrusionsverfahren aus dem vollständig, insbesondere rückstandslos, biologisch abbaubaren Material hergestellt. Der Grundkörper 16a ist aus Streben 26a gebildet, welche, insbesondere direkt, durch ein Extrusionsverfahren aus dem vollständig, insbesondere rückstandslos, biologisch abbaubaren Material hergestellt sind. Die Streben 26a werden insbesondere aus dem vollständig, insbesondere rückstandslos, biologisch abbaubaren Material extrudiert und aufeinandergelegt, um den Grundkörper 16a, insbesondere den als Skelettstruktur ausgebildeten Grundkörper 16a, auszubilden. Die Streben 26a sind, insbesondere nach einer Extrusion, durch eine Vielzahl von Verbindungspunkten 24a zu einer Skelettstruktur verbunden. Die Streben 26a sind jeweils gebogen ausgebildet und bilden über die Außenseite des Grundkörpers 16a betrachtet ein sich regelmäßig wiederholendes maschenartiges Muster aus. Der Grundkörper 16a umschließt die Durchführung 18a um die Mittelachse 14a, wobei der Grundkörper 16a dazu vorgesehen ist, entlang einer maximalen Längserstreckung 30a des Grundkörpers 16a senkrecht zur Mittelachse 14a betrachtet höchstens 70%, vorzugsweise höchstens 50% und besonders bevorzugt höchstens 40%, eines die Durchführung 18a ausfüllenden gedachten Körpers zu verdecken. Insbesondere ist der die Durchführung 18a ausfüllende gedachte Körper über die Ausnehmungen 28a sichtbar ausgebildet. Die maximale Längserstreckung 30a des Grundkörpers 16a ist zumindest im Wesentlichen parallel zur Mittelachse 14a des Grundkörpers 16a und/oder zur Durchführung 18a ausgerichtet. Der Grundkörper 16a ist in dem in den Figuren 1 und 2 gezeigten Zustand zum Schutz der Pflanze 12a im Wesentlichen starr ausgebildet. Es ist denkbar, dass die Pflanzenschutzvorrichtung 10a eine Schutzschicht und/oder eine Farbschicht umfasst, die an dem Grundkörper 16a angeordnet ist (in Figuren nicht gezeigt) und vorzugsweise zu einer Verzögerung einer Verwitterung des Grundkörpers 16a vorgesehen ist.

Der Grundkörper 16a ist röhrenartig ausgebildet. Der Grundkörper 16a weist eine zumindest im Wesentlichen kreisrunde maximale Querschnittsfläche auf. Die Durchführung 18a ist insbesondere im Wesentlichen zylinderförmig ausgebildet. Es sind aber auch andere Ausgestaltungen des Grundkörpers 16a denkbar, beispielsweise mit einer quaderförmigen Grundform, einer vieleckigen, insbesondere drei-, vier- oder fünfeckigen, oder einer elliptischen Querschnittsfläche o.dgl. Zudem ist denkbar, dass der Grundkörper 16a zumindest teilweise formelastisch ausgebildet ist und dazu vorgesehen ist, sich formschlüssig an die Pflanze 12a anzulegen.

Die Pflanzenschutzvorrichtung 10a umfasst ein Hüllelement 32a. Das Hüllelement 32a ist an dem Grundkörper 16a, insbesondere einer Innenseite des Grundkörpers 16a, angeordnet. Das Hüllelement 32a ist dazu vorgesehen, die Durchführung 18a entlang der Mittelachse 14a des Grundkörpers 16a betrachtet zumindest im Wesentlichen vollständig zu umschließen. Das Hüllelement 32a ist hülsenförmig um die Durchführung 18a angeordnet. Das Hüllelement 32a weist, insbesondere in dem in den Figuren 1 und 2 gezeigten Betriebszustand, eine zylindermantelflächenförmige Grundform auf. Das Hüllelement 32a ist aus einem vollständig, insbesondere rückstandslos, biologisch abbaubaren Material ausgebildet. Das Hüllelement 32a ist aus einem Stück Vliesstoff ausgebildet, welcher aus Schafswolle ausgebildet ist. Alternativ dazu ist der Vliesstoff aus anderen Arten von tierischer Wolle, aus pflanzlichen Fasern, wie Baumwollfasern, Hanf- oder Kokosfasern, o.dgl. ausgebildet. Der Grundkörper 16a ist dazu vorgesehen, das Hüllelement 32a an einer der Durchführung 18a abgewandten Außenseite des Hüllelements 32a abzustützen (vgl. Figur 2). Der Grundkörper 16a ist zumindest kraftschlüssig mit dem Hüllelement 32a verbunden. Der Grundkörper 16a ist insbesondere zumindest teilweise stoffschlüssig mit dem Hüllelement 32a verbunden. Der Grundkörper 32a liegt um die Mittelachse 14a des Grundkörpers 16a, insbesondere über eine gesamte Flächenerstreckung des Hüllelements 32a gleichmäßig, flächig an dem Hüllelement 32a an. Das Hüllelement 32a ist, insbesondere über eine gesamte Hauptoberfläche des Hüllelements 32a, zumindest teilweise durchsichtig ausgebildet.

Der Grundkörper 16a bildet Befestigungsmittel 34a zu einer Fixierung des Grundkörpers 16a in zumindest einem Betriebszustand zum Schutz der Pflanze 12a und zu einer Befestigung der Pflanzenschutzvorrichtung 10a an dem Stützelement 20a aus. Der über die Befestigungsmittel 34a fixierte Grundkörper 16a umschließt die Durchführung 18a hülsenartig. Die Befestigungsmittel 34a sind jeweils als eine Öse ausgebildet, welche durch eine Strebe des Grundkörpers 16a ausgeformt ist. Die Befestigungsmittel 34a sind einstückig mit dem Grundkörper 16a verbunden, insbesondere einteilig mit dem Grundkörper 16a ausgebildet. Die Befestigungsmittel 34a sind entlang der Mittelachse 14a des Grundkörpers 16a betrachtet und/oder entlang der maximalen Längserstreckung 30a des Grundkörpers 16a hintereinander angeordnet. Die Befestigungsmittel 34a sind dazu vorgesehen, das Stützelement 20a zu umschließen und den Grundkörper 16a an dem Stützelement 20a zu befestigen. Die Befestigungsmittel 34a sind vorzugsweise aus dem gleichen Material ausgebildet wie der Grundkörper 16a. Die Befestigungsmittel 34a sind an einer der Durchführung 18a abgewandten Außenseite des Grundkörpers 16a angeordnet. Insbesondere ist das Stützelement 20a zu einer Anordnung/Befestigung an der Außenseite des Grundkörpers 16a vorgesehen. Die maximale Längserstreckung 30a des Grundkörpers 16a entspricht zumindest im Wesentlichen einer maximalen Längserstreckung der Pflanzenschutzvorrichtung 10a mit Ausnahme des Stützelements 20a. Das Stützelement 20a erstreckt sich zumindest teilweise über die maximale Längserstreckung 30a des Grundkörpers 16a hinaus in den Untergrund 22a. Es sind auch andere Ausgestaltungen des Stützelements 20a denkbar, beispielsweise als eine Art Anker oder Hering, welcher lediglich an einer dem Untergrund 22a zugewandten Unterseite des Grundkörpers 16a am Grundkörper 16a befestigbar ist oder mit einer vorgesehenen Anordnung/Befestigung an einer Innenseite des Grundkörpers 16a. Es ist denkbar, dass die Pflanzenschutzvorrichtung 10a dazu vorgesehen ist, lediglich über die zu schützende Pflanze 12a gehalten, insbesondere aufgestellt, zu werden. Beispielsweise liegt der Grundkörper 16a formschlüssig an der zu schützenden Pflanze 12a an oder umfasst Befestigungsmittel zu einer Befestigung an der Pflanze 12a. Alternativ oder zusätzlich ist denkbar, dass das Stützelement 20a durch den Grundkörper 16a geführt ist und/oder zwischen Grundkörper 16a und Hüllelement 32a angeordnet ist, wobei insbesondere der Grundkörper 16a, insbesondere Streben des Grundkörpers 16a, und/oder das Hüllelement 32a als Befestigungsmittel ausgebildet sind. Alternativ oder zusätzlich ist denkbar, dass die Pflanzenschutzvorrichtung 10a Befestigungsmittel umfasst, die getrennt von dem Grundkörper 16a ausgebildet sind, beispielsweise als Seile, als Kabelbinder, als Spanngurte o.ä. Bevorzugt sind Befestigungsmittel 34a der Pflanzenschutzvorrichtung 10a aus einem vollständig, insbesondere rückstandslos, biologisch abbaubaren Material ausgebildet.

Alternativ zu der in der Figur 2 gezeigten Ausgestaltung der Pflanzenschutzvorrichtung 10a ist denkbar, dass der Grundkörper 16a an einer Innenseite des Hüllelements 32a angeordnet ist. Insbesondere ist das Hüllelement 32a zu einem Verwitterungsschutz des Grundkörpers 16a vor äußeren Einflüssen, insbesondere Licht, vorgesehen. Zusätzlich ist denkbar, dass die Pflanzenschutzvorrichtung 10a zumindest eine Schutzschicht für das Hüllelement 32a umfasst, die an einer Außenseite des Hüllelements 32a angeordnet ist. Insbesondere ist die Schutzschicht für das Hüllelement 32a als eine Folie ausgebildet und zu einem Verwitterungsschutz des Hüllelements 32a und des, insbesondere an der Innenseite des Hüllelements 32a angeordneten, Grundkörpers 16a vorgesehen. Alternativ sind auch andere, insbesondere von einer Folie verschiedene, Ausgestaltungen der Schutzschicht für das Hüllelement 32a denkbar.

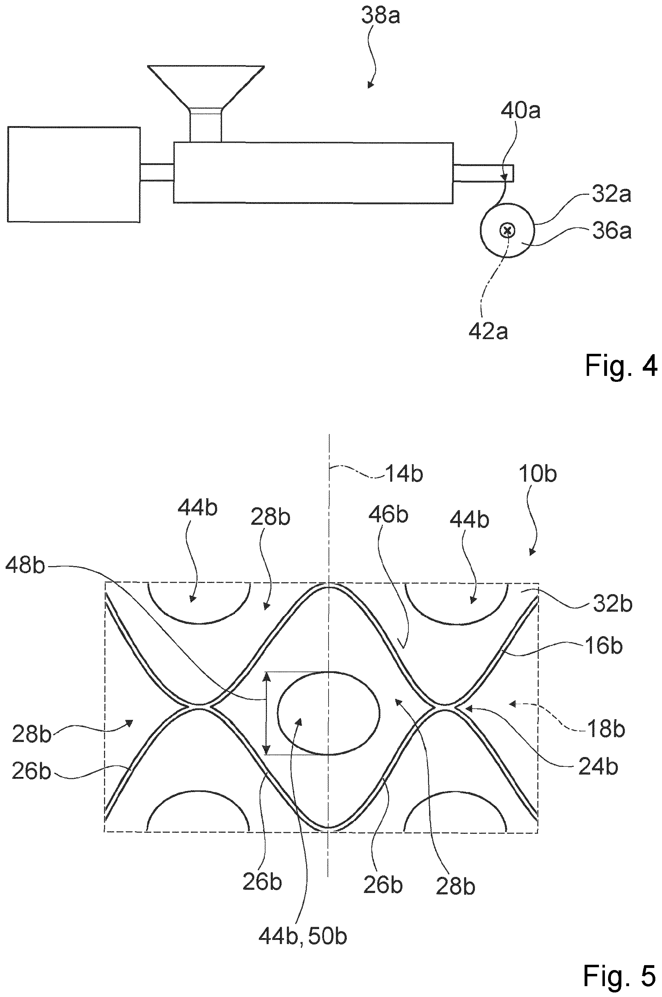

In Figur 3 ist ein beispielhafter Ablauf eines Verfahrens 100a zur Herstellung der Pflanzenschutzvorrichtung 10a gezeigt. In einem Verfahrensschritt 102a des Verfahrens 100a wird das Hüllelement 32a hergestellt. Insbesondere wird das Hüllelement 32a aus einer Bahn des Vliesstoffes ausgeschnitten bzw. zugeschnitten. Bevorzugt wird aus Schafswolle ein flächiges Halbzeug hergestellt, welches dazu vorgesehen ist, das Hüllelement 32a auszubilden. Es ist denkbar, dass in das Hüllelement 32a Licht- und/oder Belüftungsausnehmungen eingebracht werden (siehe Figur 5), beispielsweise durch ein Stanz-, Press- oder Schneidverfahren, bevorzugt In dem Verfahrensschritt 102a. In einem weiteren Verfahrensschritt 104a des Verfahrens 100a wird der Grundkörper 16a hergestellt, wobei der Grundkörper 16a durch ein Extrusionsverfahren aus dem Lignin-Gemisch hergestellt wird (siehe Figur 4). Vorzugsweise wird das Lignin-Gemisch auf eine Außenfläche eines rotierbaren Extrusionskörpers 36a (siehe Figur 4) aufgetragen. Insbesondere weist die Außenfläche des Extrusionskörpers 36a eine gebogene Grundform auf, wobei der Grundkörper 16a derart hergestellt wird, dass der Grundkörper 16a in einem unbelasteten Zustand, insbesondere entlang der Mittelachse 14a des Grundkörpers 16a betrachtet, eine gebogene Grundform aufweist. Alternativ ist denkbar, dass der Extrusionskörper 36a mehrere winklig zueinander angeordnete Außenflächen aufweist, wobei der Grundkörper 16a derart hergestellt wird, dass der Grundkörper 16a in einem unbelasteten Zustand, insbesondere entlang der Mittelachse 14a des Grundkörpers 16a betrachtet, eine angewinkelte Grundform aufweist. In einem Verfahrensschritt des Verfahrens 100a, insbesondere dem Verfahrensschritt 104a, wird der Grundkörper 16a bei einem Herstellen des Grundkörpers 16a direkt auf und/oder an dem Hüllelement 32a ausgebildet. Bevorzugt wird das Hüllelement 32a in einem Verfahrensschritt 106a des Verfahrens 100a, vor der Ausformung des Grundkörpers 16a über das Extrusionsverfahren, über die Außenfläche des Extrusionskörpers 36a an dem Extrusionskörper 36a angeordnet. Bevorzugt härtet das Lignin-Gemisch bei der Herstellung des Grundkörpers 16a auf dem Hüllelement 32a aus. In einem weiteren Verfahrensschritt 108a des Verfahrens 100a werden die Befestigungsmittel 34a bei oder nach dem Ausformen des Grundkörpers 16a an oder aus dem Grundkörper 16a ausgebildet. Es ist denkbar, dass in zumindest einem Verfahrensschritt des Verfahrens 100a, insbesondere nach der Herstellung des Grundkörpers 16a, der Grundkörper 16a mit zumindest einer Schutzschicht und/oder mit zumindest einer Farbschicht überzogen wird. In einem weiteren Verfahrensschritt 110a des Verfahrens 100a wird das Stützelement 20a hergestellt. In einem weiteren Verfahrensschritt 112a des Verfahrens 100a wird der Grundkörper 16a zusammen mit dem Hüllelement 32a über die Befestigungsmittel 34a an dem Stützelement 20a befestigt. Insbesondere erfolgt eine Befestigung des Grundkörpers 16a und des Hüllelements 32a an dem Stützelement 20a vor einer Anordnung der Pflanzenschutzvorrichtung 10a an der Pflanze 12a und/oder einem Aufstellen der Pflanzenschutzvorrichtung 10a, wobei insbesondere das Stützelement 20a in einem an dem Grundkörper 16a und dem Hüllelement 32a befestigten Zustand transportiert wird, oder bei einer Anordnung der Pflanzenschutzvorrichtung 10a an der Pflanze 12a und/oder einem Aufstellen der Pflanzenschutzvorrichtung 10a. Es ist denkbar, dass der Grundkörper 16a aus Halbschalen hergestellt ist. Alternativ ist denkbar, dass der Grundkörper 16a aus einer Vielzahl an Körpern gebildet wird.

In Figur 4 ist schematisch eine beispielhafte Vorrichtung 38a zu einer Durchführung des Extrusionsverfahrens zur Herstellung des Grundkörpers 16a gezeigt. Der Extrusionskörper 36a ist insbesondere als eine Rolle ausgebildet, auf die das Hüllelement 32a aufgezogen wird. Insbesondere umfasst die Vorrichtung 38a eine Vielzahl von Extrusionsauslassöffnungen 40a, welche in einer Reihe parallel zu einer Rotationsachse 42a des Extrusionskörpers 36a angeordnet sind. Insbesondere wird der Extrusionskörper 36a bei der Herstellung des Grundkörpers 16a um die Rotationsachse 42a bewegt. Bevorzugt werden in dem Verfahrensschritt, insbesondere dem Verfahrensschritt 104a (vgl. Figur 3), zur Herstellung des Grundkörpers 16a gleichzeitig eine Vielzahl von Streben 26a ausgeformt, insbesondere über die maximale Längserstreckung 30a des herzustellenden Grundkörpers 16a. Bevorzugt werden die Extrusionsauslassöffnungen 40a bei der Herstellung des Grundkörpers 16a in einer vorgegebenen sich wiederholenden Sequenz parallel zur Rotationsachse 42a des Extrusionskörpers 36a bewegt, wobei die Skelettstruktur des herzustellenden Grundkörpers 16a gebildet wird. Dadurch kann der Grundkörper 16a vorteilhaft schnell entlang einer Haupterstreckung des herzustellenden Grundkörpers 16a hergestellt werden. Die extrudierten Streben 26a, aus denen der Grundkörper 16a geformt wird, werden mit einem Mehrstrangextruder extrudiert. Es wäre jedoch auch denkbar, dass die Streben 26a mit einem Einstrangextruder hintereinander extrudiert werden. Dabei werden die Steben 26a auf einen zylinderförmigen, oder einer vom Fachmann sinnvoll erachteten anderen Form des Extrusionskörpers 36a, abgelegt. Nach dem Ablegen aller extrudierten Streben 26a auf dem Extrusionskörper 36a wird der Extrusionsprozess angehalten und der Grundkörper 16a entnommen. Ein weiterer Extrusionsprozess eines Grundkörpers 16a kann gestartet werden. Es ist denkbar, dass der Extrusionskörper 36a über eine zusätzliche Walze verfügt, um die extrudierten Streben 26a auf den sich drehenden Extrusionskörper 36a bei einer Überlappung der Streben 26a anzupressen. Dabei könnten die Streben 26a einen stoffschlüssigen Verbindungspunkt 24a ausbilden. Die Mehrzahl von Streben 26a werden gleichzeitig mittels einer Mehrzahl an Extrusionsauslassöffnungen 40a extrudieren und bilden den Grundkörper 16a. Es werden mehrere Streben 26a gleichzeitig extrudiert. Es ist denkbar, dass die Extrusionsauslassöffnungen 40a den gleichen Abstand zueinander haben oder die Abstände der Extrusionsauslassöffnungen 40a zueinander verschieden sein können. Die Streben 26a können durch die Mehrzahl an Extrusionsauslassöffnungen 40a auch in unterschiedlichen Ebenen gelegt werden, die den Grundkörper 16a bilden.

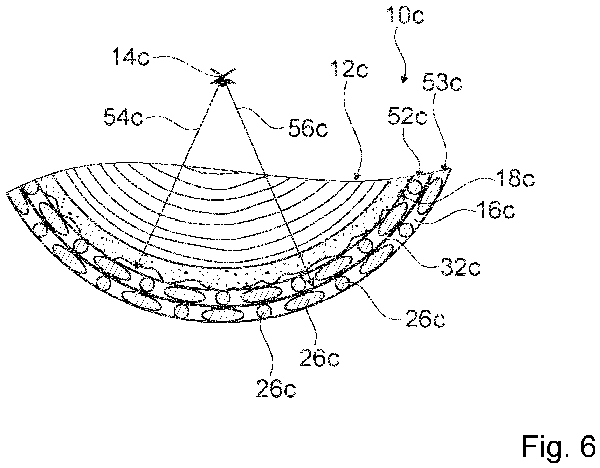

In den Figuren 5 bis 9 sind fünf weitere Ausführungsbeispiele der Erfindung gezeigt. Die nachfolgende Beschreibung und Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des vorhergehenden Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 6 bis 10 ist der Buchstabe a jeweils durch einen der Buchstaben b bis f ersetzt.

In Figur 5 ist eine schematische Detailansicht einer ersten alternativen Ausgestaltung einer Pflanzenschutzvorrichtung 10b gezeigt, wobei ein Grundkörper 16b und ein Hüllelement 32b der Pflanzenschutzvorrichtung 10b senkrecht zu einer Mittelachse 14b des Grundkörpers 16b betrachtet gezeigt sind. Der Grundkörper 16b ist einstückig ausgebildet und dazu vorgesehen, insbesondere zum Schutz zumindest einer Pflanze (in Figur 5 nicht gezeigt), zumindest eine Durchführung 18b zumindest teilweise zu umschließen. Der Grundkörper 16b ist aus einem vollständig, insbesondere rückstandslos, biologisch abbaubaren Material ausgebildet. Der Grundkörper 16b ist als eine Skelettstruktur ausgebildet. Das Hüllelement 32b ist an dem Grundkörper 16b angeordnet und dazu vorgesehen, die Durchführung 18b entlang der Mittelachse 14b des Grundkörpers 16b betrachtet zumindest teilweise, insbesondere zumindest größtenteils, bevorzugt zumindest im Wesentlichen vollständig, zu umschließen. Das Hüllelement 32b ist aus einem vollständig, insbesondere rückstandslos, biologisch abbaubaren Material ausgebildet. Im Unterschied zu der in der Beschreibung der Figuren 1 bis 4 beschriebenen Pflanzenschutzvorrichtung 10a begrenzt das Hüllelement 32b der in der Figur 5 dargestellten Pflanzenschutzvorrichtung 10b eine Mehrzahl von Licht- und/oder Belüftungsausnehmungen 44b. Die Licht- und/oder Belüftungsausnehmungen 44b erstrecken sich jeweils von einer Außenseite des Hüllelements 32b bis zu einer Innenseite des Hüllelements 32b über die maximale Dicke des Hüllelements 32b. Die Licht- und/oder Belüftungsausnehmungen 44b sind jeweils zumindest im Wesentlichen identisch ausgebildet. Alternativ ist denkbar, dass die Licht- und/oder Belüftungsausnehmungen 44b in verschiedenen Bereichen des Hüllelements 32b unterschiedliche Größen aufweisen, beispielsweise zu einer vorteilhaften Belüftung bestimmter Bereiche der Pflanze und/oder zu einer vorteilhaften Beleuchtung bestimmter Bereiche der Pflanze, insbesondere von Blattwerk der Pflanze. Die Licht- und/oder Belüftungsausnehmungen 44b sind über eine Hauptoberfläche 46b des Hüllelements 32b betrachtet gleichmäßig verteilt angeordnet. Alternativ ist denkbar, dass die Licht- und/oder Belüftungsausnehmungen 44b lediglich in einem Teilbereich des Hüllelements 32b angeordnet sind, beispielsweise an einer einem Untergrund abgewandten Oberseite des Hüllelements 32b. Das Hüllelement 32b ist in von den Licht- und/oder Belüftungsausnehmungen 44b beabstandeten Bereichen zumindest im Bereich des sichtbaren Lichts und/oder unter natürlichen Lichtverhältnissen undurchsichtig ausgebildet. Die Licht- und/oder Belüftungsausnehmungen 44b sind dazu vorgesehen, eine zumindest teilweise Beleuchtung der zu schützenden Pflanze und/oder eine Luftzirkulation innerhalb der Durchführung 18b zu ermöglichen. Alternativ ist denkbar, dass das Hüllelement 32b ausschließlich Lichtausnehmungen 44b, ausschließlich Belüftungsausnehmungen 44b oder verschieden voneinander ausgebildete Lichtausnehmungen 44b und Belüftungsausnehmungen 44b begrenzt. Insbesondere weisen Belüftungsausnehmungen 44b eine größere maximale Querschnittsfläche auf, wie Lichtausnehmungen 44b. Bevorzugt weisen die Licht- und/oder Belüftungsausnehmungen 44b jeweils einen minimalen Durchmesser 48b von mindestens 0,5 cm, vorzugsweise mindestens 1 cm und besonders bevorzugt mindestens 1,5 cm, auf. Bevorzugt weisen die Licht- und/oder Belüftungsausnehmungen 44b jeweils eine maximale Querschnittsfläche 50b von mindestens 0,5 cm², vorzugsweise mindestens 1 cm² und bevorzugt mindestens 1,5 cm², auf. Der Grundkörper 16b, insbesondere Streben 26b des Grundkörpers 16b, sind beabstandet von den Licht- und/oder Belüftungsausnehmungen 44b an dem Hüllelement 32b angeordnet. Alternativ ist denkbar, dass sich der Grundkörper 16b, insbesondere Streben 26b des Grundkörpers 16b, zumindest teilweise durch Licht- und/oder Belüftungsausnehmungen 44b des Hüllelements 32b hindurch erstreckt/erstrecken, bevorzugt zu einem Abstützen und/oder Halten des Hüllelements 32b.

In Figur 6 ist eine Schnittansicht einer zweiten alternativen Ausgestaltung einer Pflanzenschutzvorrichtung 10c in einem Teilbereich bei einer Anordnung an einer als Baum ausgebildeten Pflanze 12c gezeigt. Eine Schnittebene ist zumindest im Wesentlichen senkrecht zu einer Mittelachse 14c eines Grundkörpers 16c der Pflanzenschutzvorrichtung 10c angeordnet. Der Grundkörper 16c ist einstückig ausgebildet und dazu vorgesehen, insbesondere zum Schutz der Pflanze 12c, zumindest eine Durchführung 18c zumindest teilweise zu umschließen. Der Grundkörper 16c ist aus einem vollständig, insbesondere rückstandslos, biologisch abbaubaren Material ausgebildet. Der Grundkörper 16c ist als eine Skelettstruktur ausgebildet. Die Pflanzenschutzvorrichtung 10c umfasst ein Hüllelement 32c. Das Hüllelement 32c ist an dem Grundkörper 16c angeordnet und dazu vorgesehen, die Durchführung 18c entlang der Mittelachse 14c des Grundkörpers 16c betrachtet zumindest teilweise, insbesondere zumindest größtenteils, bevorzugt zumindest im Wesentlichen vollständig, zu umschließen. Das Hüllelement 32c ist aus einem vollständig, insbesondere rückstandslos, biologisch abbaubaren Material ausgebildet. Im Unterschied zu der in der Beschreibung der Figuren 1 bis 4 beschriebenen Pflanzenschutzvorrichtung 10a ist der Grundkörper 16c der in der Figur 6 dargestellten Pflanzenschutzvorrichtung 10c dazu vorgesehen, das Hüllelement 32c an einer der Durchführung 18c zugewandten Innenseite und an einer der Durchführung 18c abgewandten Außenseite des Hüllelements 32c abzustützen. Den Grundkörper 16c ausbildende Streben 26c erstrecken sich an der Außenseite und an der Innenseite des Hüllelements 32c. Der Grundkörper 16c umfasst zwei Skelettstrukturlagen 52c, 53c, die, insbesondere in zumindest einem Betriebszustand zum Schutz der Pflanze 12c, jeweils die Durchführung 18c zumindest teilweise, insbesondere zumindest größtenteils, umschließen und die einstückig miteinander verbunden sind. Die zwei Skelettstrukturlagen 52c, 53c weisen radial zu der Mittelachse 14c des Grundkörpers 16c hin verschiedene Abstände 54c, 56c zur Mittelachse 14c des Grundkörpers 16c auf. Vorzugsweise sind Ausgestaltungen der Pflanzenschutzvorrichtung 10c, wobei der Grundkörper 16c zwei oder auch mehr Skelettstrukturlagen 52c, 53c umfasst, auch ohne ein Hüllelement 32c denkbar. Eine Skelettstrukturlage 52c der zwei Skelettstrukturlagen 52c, 53c ist an der Innenseite des Hüllelements 32c angeordnet. Insbesondere weist die Skelettstrukturlage 52c zur Mittlachse 14c des Grundkörpers 16c einen kleineren radialen Abstand 54c auf wie das Hüllelement 32c und eine andere der zwei Skelettstrukturlagen 53c. Die andere Skelettstrukturlage 53c der zwei Skelettstrukturlagen 52c, 53c ist an der Außenseite des Hüllelements 32c angeordnet. Insbesondere weist die andere Skelettstrukturlage 53c zur Mittelachse 14c des Grundkörpers 16c einen größeren radialen Abstand 56c auf wie das Hüllelement 32c und die Skelettstrukturlage 52c. Die zwei Skelettstrukturlagen 52c, 53c sind über Streben 26c des Grundkörpers 16c einstückig miteinander verbunden (in Figur 6 nicht gezeigt). Insbesondere ist der die zwei Skelettstrukturlagen 52c, 53c umfassende Grundkörper 16c einteilig ausgebildet. Die die zwei Skelettstrukturlagen 52c, 53c verbindenden Streben 26c (in Figur 6 nicht gezeigt) erstrecken sich zumindest teilweise durch das Hüllelement 32c und/oder sind an Endbereichen des Hüllelements 32c angeordnet, wobei die Streben 26c insbesondere das Hüllelement 32c, insbesondere eine Kante des Hüllelements 32c, zumindest teilweise umgreifen. Alternativ ist denkbar, dass die Pflanzenschutzvorrichtung 10c zumindest zwei Grundkörper 16c umfasst, die dazu vorgesehen sind, bei einer Montage und/oder in einem Betriebszustand zum Schutz der Pflanze 12c das Hüllelement 32c zu umschließen. Insbesondere bildet jeder der Grundkörper 16c eine Skelettstrukturlage 52c, 53c aus. Beispielsweise werden die zwei Grundkörper 16c analog zu den in der Figur 6 gezeigten Skelettstrukturlagen 52c, 53c um das Hüllelement 32c angeordnet und vorzugsweise miteinander verbunden. Beispielsweise umfasst zumindest einer der Grundkörper 16c Befestigungsmittel zu einer form- und/oder kraftschlüssigen Verbindung der zwei Grundkörper 16c miteinander. Es ist denkbar, dass das Hüllelement 32c durch eine Verbindung der Grundkörper 16c an den Grundkörpern 16c, insbesondere zwischen den zwei Grundkörpern 16c, fixiert ist. Es sind aber auch andere Ausgestaltungen der Pflanzenschutzvorrichtung 10c, insbesondere des/der Grundkörper 16c, denkbar, beispielsweise auch mit mehr als zwei Grundkörpern 16c.

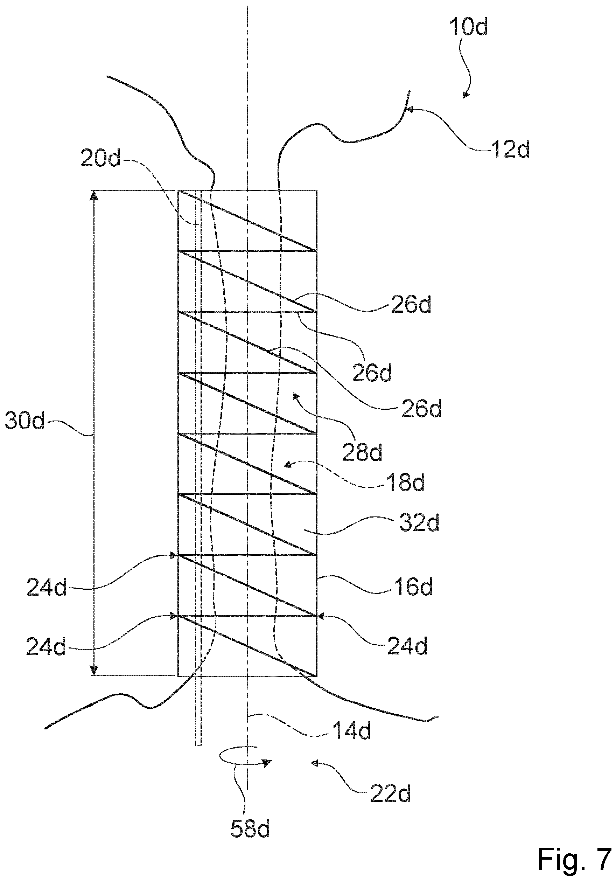

In Figur 7 ist eine schematische Seitenansicht einer dritten alternativen Ausgestaltung einer Pflanzenschutzvorrichtung 10d gezeigt, insbesondere senkrecht zu einer Mittelachse 14d eines Grundkörpers 16d der Pflanzenschutzvorrichtung 10d betrachtet. Der Grundkörper 16d ist einstückig ausgebildet und dazu vorgesehen, insbesondere zum Schutz zumindest einer Pflanze 12d, zumindest eine Durchführung 18d zumindest teilweise zu umschließen. Der Grundkörper 16d ist aus einem vollständig, insbesondere rückstandslos, biologisch abbaubaren Material ausgebildet. Der Grundkörper 16d ist als eine Skelettstruktur ausgebildet. Der als Skelettstruktur ausgebildete Grundkörper 16d ist aus einer Vielzahl von über Verbindungspunkte 24d einstückig miteinander ausgebildeter Streben 26d gebildet, welche von einer Außenseite des Grundkörpers 16d zu einer der Durchführung 18d zugewandten Innenseite des Grundkörpers 16d hin eine Vielzahl von Ausnehmungen 28d begrenzen. Im Unterschied zu der in der Beschreibung der Figuren 1 bis 4 beschriebenen Pflanzenschutzvorrichtung 10a sind die Streben 26d des Grundkörpers 16d der in der Figur 7 dargestellten Pflanzenschutzvorrichtung 10d entlang einer Umfangsrichtung 58d (vgl. auch Figur 2) um die Mittelachse 14d des Grundkörpers 16d betrachtet jeweils zumindest im Wesentlichen geradlinig ausgebildet. Die Streben 26d bilden in Umfangsrichtung 58d um die Mittelachse 14d des Grundkörpers 16d und entlang einer maximalen Längserstreckung 30d des Grundkörpers 16d ein sich wiederholendes Zickzack-Muster aus. Die in der Figur 7 gezeigten Anordnungen der Streben 26d, insbesondere das Muster, ist beispielhaft dargestellt. Vorzugsweise ist ein derartiges Muster auch mit anderen Abständen zwischen den Streben 26d denkbar, beispielsweise mit einer höheren Anzahl von quer zur Mittelachse 14d ausgerichteter und/oder schräg zur Mittelachse 14d angeordneter Streben 26d. Es sind auch andere Ausgestaltungen des Grundkörpers 16d denkbar, beispielsweise mit ausschließlich schräg zur Mittelachse 14d ausgerichteten Streben 26d oder mit lediglich zumindest im Wesentlichen senkrecht oder zumindest im Wesentlichen parallel zur Mittelachse 14d des Grundkörpers 16d ausgerichteten Streben.

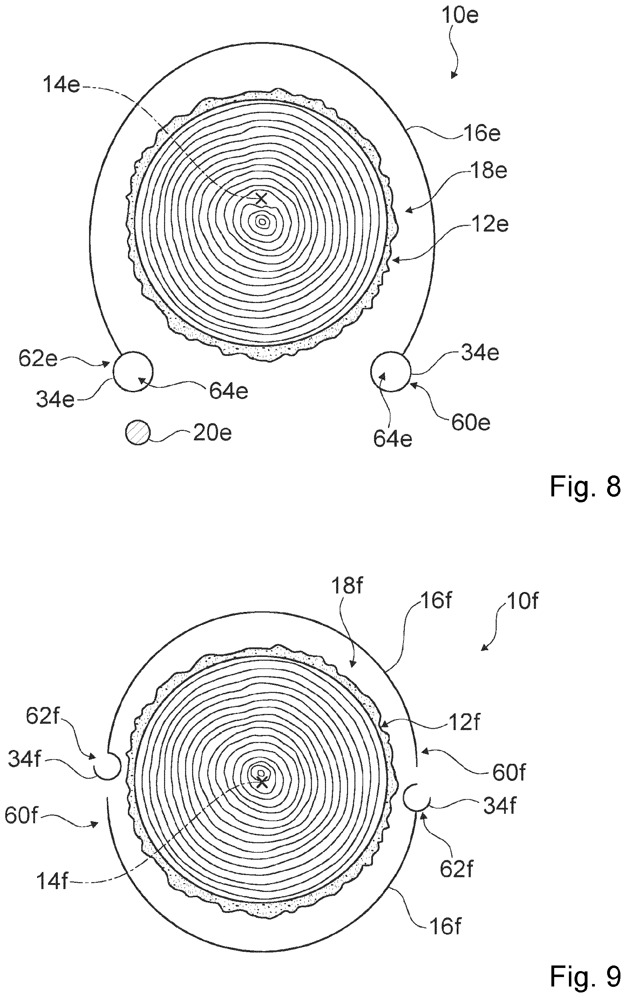

In Figur 8 ist eine schematische Schnittansicht einer vierten alternativen Ausgestaltung einer Pflanzenschutzvorrichtung 10e bei einer Anordnung an einer als Baum ausgebildeten Pflanze 12e gezeigt, wobei insbesondere eine Schnittebene senkrecht zu einer Mittelachse 14e eines Grundkörpers 16e der Pflanzenschutzvorrichtung 10e angeordnet ist. Der Grundkörper 16e ist einstückig ausgebildet und dazu vorgesehen, insbesondere zum Schutz der Pflanze 12e, zumindest eine Durchführung 18e zumindest teilweise zu umschließen. Der Grundkörper 16e ist aus einem vollständig, insbesondere rückstandslos, biologisch abbaubaren Material ausgebildet. Der Grundkörper 16e ist als eine Skelettstruktur ausgebildet. Im Unterschied zu der in der Beschreibung der Figuren 1 bis 4 beschriebenen Pflanzenschutzvorrichtung 10a ist der Grundkörper 16e der in der Figur 8 dargestellten Pflanzenschutzvorrichtung 10e formflexibel ausgebildet und dazu vorgesehen, zu einer Anordnung an der Pflanze 12e, insbesondere aus einer ebenflächigen Form oder aus der in Figur 8 gezeigten zumindest teilweise die Durchführung umschließenden Form des Grundkörpers heraus, um die Durchführung 18e gebogen zu werden, wobei der Grundkörper 16e entlang der Mittelachse 14e des Grundkörpers 16e betrachtet die Durchführung 18e zumindest im Wesentlichen vollständig umschließt (ähnlich zu Figur 2). Der Grundkörper 16e bildet eine Mehrzahl an Befestigungsmitteln 34e aus, die jeweils an einem der zumindest im Wesentlichen parallel zu einer maximalen Längserstreckung des Grundkörpers 16e und/oder zur Mittelachse 14e des Grundkörpers 16e angeordneten Randbereiche 60e, 62e des Grundkörpers 16e angeordnet sind. Die Befestigungsmittel 34e begrenzen jeweils eine Aufnahmeausnehmung 64e zu einer Aufnahme eines Stützelements 20e der Pflanzenschutzvorrichtung 10e. Insbesondere sind die Befestigungsmittel 34e jeweils ösen- oder schlaufenförmig ausgebildet. Die Befestigungsmittel 34e sind an den zwei Randbereichen 60e, 62e jeweils entlang der Mittelachse 14e des Grundkörpers 16e betrachtet hintereinander angeordnet. Bevorzugt ist der Grundkörper 16e dazu vorgesehen, zu einem Schutz der Pflanze 12e derart um die Durchführung 18e angeordnet zu werden, dass die an den zwei Randbereichen 60e, 62e angeordneten Befestigungsmittel 34e entlang der Mittelachse 14e des Grundkörpers 16e betrachtet zumindest im Wesentlichen hintereinander angeordnet sind. Insbesondere sind die an den zwei Randbereichen 60e, 62e angeordneten Befestigungsmittel 34e dazu vorgesehen, über eine Aufnahme des Stützelements 20e den Grundkörper 16e in einer die Durchführung 18e umschließenden Position zu fixieren. Das Stützelement 20e ist pfosten- oder stabförmig ausgebildet. Das Stützelement 20e ist dazu vorgesehen, durch die Aufnahmeausnehmungen 64e hindurch an dem Grundkörper 16e angeordnet zu werden. Alternativ ist denkbar, dass die Pflanzenschutzvorrichtung 10e eine Mehrzahl von Stützelementen 20e umfasst, die jeweils dazu vorgesehen sind zwei der Befestigungsmittel 34e oder mehrere Paare der Befestigungsmittel 34e miteinander zu verbinden, vorzugsweise über deren Aufnahmeausnehmungen 64e. Insbesondere sind die zwei Randbereiche 60e, 62e des Grundkörpers 16e entlang einer senkrecht zur Mittelachse 14e ausgerichteten Haupterstreckung des Grundkörpers 16e an zwei einander abgewandten Kanten des Grundkörpers 16e ausgebildet. Die Befestigungsmittel 34e sind vorzugsweise jeweils aus Streben des Grundköpers 16e ausgebildet. Die Befestigungsmittel 34e sind jeweils aus vollständig, insbesondere rückstandslos, biologisch abbaubarem Material ausgebildet. Insbesondere sind die Befestigungsmittel 34e jeweils aus dem gleichen Material ausgebildet wie der Grundkörper 16e. Bevorzugt sind die Befestigungsmittel 34e einstückig mit dem Grundkörper 16e ausgebildet. Alternativ ist aber auch denkbar, dass die Pflanzenschutzvorrichtung 10e von dem Grundkörper 16e getrennt ausgebildete Befestigungsmittel 34e umfasst. Es ist denkbar, dass die Pflanzenschutzvorrichtung 10e eine Mehrzahl von Grundkörpern 16e aufweist, die dazu vorgesehen sind, über Befestigungsmittel 34e und zumindest ein Stützelement 20e in einem Betriebszustand zum Schutz der Pflanze 12e miteinander verbunden werden.

In Figur 9 ist eine schematische Schnittansicht einer fünften alternativen Ausgestaltung einer Pflanzenschutzvorrichtung 10f bei einer Anordnung an einer als Baum ausgebildeten Pflanze 12f gezeigt, wobei insbesondere eine Schnittebene senkrecht zu einer Mittelachse 14f einer zu umschließenden Durchführung 18f angeordnet ist. Im Unterschied zu der in der Beschreibung der Figuren 1 bis 4 beschriebenen Pflanzenschutzvorrichtung 10a umfasst die in der Figur 9 dargestellte Pflanzenschutzvorrichtung 10f zwei Grundkörper 16f. Die zwei Grundkörper 16f sind dazu vorgesehen, insbesondere zum Schutz der Pflanze 12f, zumindest eine Durchführung 18f zumindest teilweise zu umschließen. Die zwei Grundkörper 16f sind jeweils einstückig ausgebildet. Die zwei Grundkörper 16f sind jeweils aus einem vollständig, insbesondere rückstandslos, biologisch abbaubaren Material ausgebildet. Die zwei Grundkörper 16f sind jeweils als eine Skelettstruktur ausgebildet. Die zwei Grundkörper 16f bilden jeweils Befestigungsmittel 34f aus, die zu einer Verbindung der zwei Grundkörper 16f bei einem Umschließen der Durchführung 18f vorgesehen sind. Die Befestigungsmittel 34f sind jeweils an einem Randbereich 60f, 62f eines der Grundkörper 16f angeordnet und dazu vorgesehen, form- und/oder kraftschlüssig mit dem jeweils anderen Grundkörper 16f verbunden zu werden, vorzugsweise über ein Zusammenwirken mit zumindest einer Strebe des anderen Grundkörpers 16f. Alternativ ist denkbar, dass die zwei Grundkörper 16f an zwei Randbereichen 60f, 62f jeweils ein oder mehrere Befestigungsmittel 34f ausbilden und/oder jeweils Befestigungsmittel 34f und zu den Befestigungsmitteln 34f korrespondierend ausgebildete andere Befestigungsmittel ausbilden, die insbesondere zu einem Zusammenwirken mit Befestigungsmitteln 34f des jeweils anderen Grundkörpers 16f vorgesehen sind. Insbesondere sind die zwei Grundkörper 16f im Wesentlichen starr ausgebildet. Alternativ ist denkbar, dass die Grundkörper 16f formflexibel ausgebildet sind. Alternativ oder zusätzlich ist denkbar, dass die Pflanzenschutzvorrichtung 10f mehr als zwei Grundkörper 16f umfasst, die analog zu den in Figur 9 gezeigten zwei Grundkörpern 16f zum Schutz der Pflanze 12f miteinander verbindbar sind. Alternativ oder zusätzlich ist denkbar, dass die Pflanzenschutzvorrichtung 10f analog zu der in den Figuren 1 bis 4 beschriebenen Pflanzenschutzvorrichtung 10a oder anlog zu der in der Figur 8 beschriebenen Pflanzenschutzvorrichtung 10e zumindest ein Stützelement umfasst und/oder Befestigungsmittel zu einer Befestigung an einem/dem Stützelement und/oder der Pflanze 12f umfasst.

**Bezugszeichen**

| | | | |
|---|---|---|---|
| 10 | Pflanzenschutzvorrichtung | 100 | Verfahren |
| 12 | Pflanze | 102 | Verfahrensschritt |
| 14 | Mittelachse | 104 | Verfahrensschritt |
| 16 | Grundkörper | 106 | Verfahrensschritt |
| 18 | Durchführung | 108 | Verfahrensschritt |
| 20 | Stützelement | 110 | Verfahrensschritt |
| 22 | Untergrund | 112 | Verfahrensschritt |
| 24 | Verbindungspunkt | | |
| 26 | Strebe | | |
| 28 | Ausnehmung | | |
| 30 | Längserstreckung | | |
| 32 | Hüllelement | | |
| 34 | Befestigungsmittel | | |
| 36 | Extrusionskörper | | |
| 38 | Vorrichtung | | |
| 40 | Extrusionsauslassöffnung | | |
| 42 | Rotationsachse | | |
| 44 | Licht- und/oder Belüftungsausnehmung | | |
| 46 | Hauptoberfläche | | |
| 48 | Durchmesser | | |
| 50 | Querschnittsfläche | | |
| 52 | Skelettstrukturlage | | |
| 53 | Skelettstrukturlage | | |
| 54 | Abstand | | |
| 56 | Abstand | | |
| 58 | Umfangsrichtung | | |
| 60 | Randbereich | | |
| 62 | Randbereich | | |
| 64 | Aufnahmeausnehmung | | |

## Patentansprüche

1. Pflanzenschutzvorrichtung mit zumindest einem einstückig ausgebildeten Grundkörper (16a; 16b; 16c; 16d; 16e; 16f), welcher dazu vorgesehen ist, insbesondere zum Schutz zumindest einer Pflanze (12a; 12c; 12d; 12e; 12f), zumindest eine Durchführung (18a; 18b; 18c; 18d; 18e; 18f) zumindest teilweise zu umschließen, wobei der Grundkörper (16a; 16b; 16c; 16d; 16e; 16f) aus einem vollständig, insbesondere rückstandslos, biologisch abbaubaren Material ausgebildet ist, wobei der Grundkörper (16a; 16b; 16c; 16d; 16e; 16f) als eine Skelettstruktur ausgebildet ist, **dadurch gekennzeichnet, dass** der als Skelettstruktur ausgebildete Grundkörper (16a; 16b; 16c; 16d; 16e; 16f) aus einer Vielzahl von über Verbindungspunkte (24a; 24d) einstückig miteinander ausgebildeter Streben (26a; 26b; 26c; 26d) gebildet ist, welche von einer Außenseite des Grundkörpers (16a; 16b; 16c; 16d; 16e; 16f) zu einer der Durchführung (18a; 18b; 18c; 18d; 18e; 18f) zugewandten Innenseite des Grundkörpers (16a; 16b; 16c; 16d; 16e; 16f) hin eine Vielzahl von Ausnehmungen (28a; 28d) begrenzen, wobei die Verbindungspunkte (24a; 24d) bei einem Aufbringen einer zweiten Lage an extrudierten Streben über eine erste Lage an extrudierten Streben auf einem Extrusionskörper (36a) gebildet werden.

2. Pflanzenschutzvorrichtung nach Anspruch 1, **dadurch gekennzeichnet, dass** der Grundkörper (16a; 16b; 16c; 16d; 16e; 16f), durch ein Extrusionsverfahren aus dem vollständig, insbesondere rückstandslos, biologisch abbaubaren Material hergestellt ist.

3. Pflanzenschutzvorrichtung nach einem der vorhergehenden Ansprüche, **dadurch gekennzeichnet, dass** der Grundkörper (16a; 16b; 16c; 16d; 16e; 16f) aus Streben (26a; 26b; 26c; 26d) gebildet ist, welche, insbesondere direkt, durch ein Extrusionsverfahren aus dem vollständig, insbesondere rückstandslos, biologisch abbaubaren Material hergestellt sind.

4. Pflanzenschutzvorrichtung nach Anspruch 3, **dadurch gekennzeichnet, dass** die Streben (26a; 26b; 26c; 26d), insbesondere nach einer Extrusion, durch eine Vielzahl von Verbindungspunkten (24a; 24d) zu einer Skelettstruktur verbunden sind.

5. Pflanzenschutzvorrichtung nach Anspruch 1 , **dadurch gekennzeichnet, dass** der Grundkörper (16a; 16b; 16c; 16d; 16e; 16f), insbesondere in zumindest einem Betriebszustand zum Schutz zumindest einer Pflanze (12a; 12c; 12d; 12e; 12f), eine Mittelachse (14a; 14b; 14c; 14d; 14e; 14f) umfasst, wobei der Grundkörper (16a; 16b; 16c; 16d; 16e; 16f) die Durchführung (18a; 18b; 18c; 18d; 18e; 18f) um die Mittelachse (14a; 14b; 14c; 14d; 14e; 14f) umschließt, wobei der Grundkörper (16a; 16b; 16c; 16d; 16e; 16f) dazu vorgesehen ist, entlang einer maximalen Längserstreckung (30a; 30d) des Grundkörpers (16a; 16b; 16c; 16d; 16e; 16f) senkrecht zur Mittelachse (14a; 14b; 14c; 14d; 14e; 14f) betrachtet höchstens 70% eines die Durchführung (18a; 18b; 18c; 18d; 18e; 18f) ausfüllenden gedachten Körpers zu verdecken.

6. Pflanzenschutzvorrichtung nach einem der vorhergehenden Ansprüche, **dadurch gekennzeichnet, dass** der Grundkörper (16a; 16b; 16c; 16d; 16e; 16f) zumindest größtenteils aus einem Gelatinegemisch besteht.

7. Pflanzenschutzvorrichtung nach einem der vorhergehenden Ansprüche, **dadurch gekennzeichnet, dass** der Grundkörper (16a; 16b; 16c; 16d; 16e; 16f) zumindest größtenteils aus einer Lignin-Mischung besteht.

8. Pflanzenschutzvorrichtung nach einem der vorhergehenden Ansprüche, **dadurch gekennzeichnet, dass** der Grundkörper (16a; 16b; 16c; 16d; 16e; 16f) zumindest größtenteils aus einer Material-Mischung besteht, welche Polybutylenadipat-terephthalat (PBAT), Polylactide (PLA) und Lignin umfasst.

9. Pflanzenschutzvorrichtung nach einem der vorhergehenden Ansprüche, **dadurch gekennzeichnet, dass** der Grundkörper (16a; 16b; 16c; 16d; 16e; 16f) zumindest größtenteils aus einer Material-Mischung besteht, welche Polybutylenadipat-terephthalat (PBAT), Polylactide (PLA) und Zellulose und/oder Holzfasern umfasst.

10. Pflanzenschutzvorrichtung nach einem der vorhergehenden Ansprüche, **gekennzeichnet durch** zumindest ein Hüllelement (32a; 32b; 32c), das an dem Grundkörper (16a; 16b; 16c; 16d; 16e; 16f) angeordnet ist, wobei das zumindest eine Hüllelement (32a; 32b; 32c) dazu vorgesehen ist, die Durchführung (18a; 18b; 18c; 18d; 18e; 18f) entlang einer Mittelachse (14a; 14b; 14c; 14d; 14e; 14f) des Grundkörpers (16a; 16b; 16c; 16d; 16e; 16f) betrachtet zumindest teilweise, insbesondere zumindest größtenteils, bevorzugt zumindest im Wesentlichen vollständig, zu umschließen, wobei das zumindest eine Hüllelement (32a; 32b; 32c) aus einem vollständig, insbesondere rückstandslos, biologisch abbaubaren Material ausgebildet ist.

11. Pflanzenschutzvorrichtung nach Anspruch 10, **dadurch gekennzeichnet, dass** der Grundkörper (16a; 16b; 16c; 16d; 16e; 16f) dazu vorgesehen ist, das zumindest eine Hüllelement (32a; 32b; 32c) an einer der Durchführung (18a; 18b; 18c; 18d; 18e; 18f) zugewandten Innenseite und an einer der Durchführung (18a; 18b; 18c; 18d; 18e; 18f) abgewandten Außenseite des Hüllelements (32a; 32b; 32c) abzustützen.

12. Pflanzenschutzvorrichtung nach Anspruch 10 oder 11, **dadurch gekennzeichnet, dass** das zumindest eine Hüllelement (32a; 32b; 32c) zumindest größtenteils aus einem Vliesstoff besteht.

13. Pflanzenschutzvorrichtung nach Anspruch 12, **dadurch gekennzeichnet, dass** der Vliesstoff aus tierischer Wolle, insbesondere Schafswolle, ausgebildet ist.

14. Pflanzenschutzvorrichtung nach Anspruch 12, **dadurch gekennzeichnet, dass** der Vliesstoff aus pflanzlichen Fasern, insbesondere Baumwollfasern, ausgebildet ist.

15. Pflanzenschutzvorrichtung nach einem der Ansprüche 10 bis 14,
**dadurch gekennzeichnet, dass** das zumindest eine Hüllelement (32b) eine Mehrzahl von Licht- und/oder Belüftungsausnehmungen (44b) begrenzt.

16. Pflanzenschutzvorrichtung nach einem der vorhergehenden Ansprüche, **dadurch gekennzeichnet, dass** der Grundkörper (16c) zumindest zwei Skelettstrukturlagen (52c, 53c) umfasst, die, insbesondere in zumindest einem Betriebszustand zum Schutz zumindest einer Pflanze (12c), jeweils die Durchführung (18c) zumindest teilweise umschließen und die einstückig miteinander verbunden sind, wobei die zumindest zwei Skelettstrukturlagen (52c, 53c) radial zu einer Mittelachse (14c) des Grundkörpers (16c) hin verschiedene Abstände (54c, 56c) zur Mittelachse (14c) des Grundkörpers (16c) aufweisen.

17. Pflanzenschutzvorrichtung zumindest nach Anspruch 1, **dadurch gekennzeichnet, dass** die Streben (26d), insbesondere in zumindest einem Betriebszustand zum Schutz einer Pflanze (12d), entlang einer Umfangsrichtung (58d) um eine Mittelachse (14d) des Grundkörpers (16d) betrachtet jeweils zumindest im Wesentlichen geradlinig ausgebildet sind.

18. Pflanzenschutzvorrichtung nach einem der vorhergehenden Ansprüche, **dadurch gekennzeichnet, dass** der Grundkörper (16a; 16b; 16c; 16d; 16e; 16f) zumindest ein Befestigungsmittel (34a; 34e; 34f) zu einer Fixierung des Grundkörpers (16a; 16b; 16c; 16d; 16e; 16f) in zumindest einem Betriebszustand zum Schutz einer Pflanze (12a; 12c; 12d; 12e; 12f) und/oder zu einer Befestigung der Pflanzenschutzvorrichtung (10a; 10b; 10c; 10d; 10e; 10f) an einem Stützelement (20a; 20e) und/oder einer Pflanze (12a; 12c; 12d; 12e; 12f) ausbildet, wobei insbesondere der fixierte Grundkörper (16a; 16b; 16c; 16d; 16e; 16f) die Durchführung (18a; 18b; 18c; 18d; 18e; 18f) hülsenartig umschließt.

19. Verfahren zur Herstellung einer Pflanzenschutzvorrichtung (10a; 10b; 10c; 10d; 10e; 10f) mit zumindest einem einstückig ausgebildeten Grundkörper (16a; 16b; 16c; 16d; 16e; 16f), welcher dazu vorgesehen ist, insbesondere zum Schutz zumindest einer Pflanze (12a; 12c; 12d; 12e; 12f), zumindest eine Durchführung (18a; 18b; 18c; 18d; 18e; 18f) zumindest teilweise zu umschließen, wobei der Grundkörper (16a; 16b; 16c; 16d; 16e; 16f) aus einem vollständig, insbesondere rückstandslos, biologisch abbaubaren Material ausgebildet ist, wobei der Grundkörper (16a; 16b; 16c; 16d; 16e; 16f) als eine Skelettstruktur ausgebildet ist, **dadurch gekennzeichnet, dass** die Streben (26a; 26b; 26c; 26d) extrudiert und aufeinandergelegt werden, um den Grundkörper (16a; 16b; 16c; 16d; 16e; 16f) auszubilden, wobei in zumindest einem Verfahrensschritt (104a) der Grundkörper (16a; 16b; 16c; 16d; 16e; 16f) bei einem Herstellen des Grundkörpers (16a; 16b; 16c; 16d; 16e; 16f) auf einen zylinderförmigen Extrusionskörper (36a) ausgebildet wird, wobei die Streben (26a; 26b; 26c; 26d) auf einen zylinderförmigen Extrusionskörper (36a) abgelegt werden. 20. Verfahren nach Anspruch 19, **dadurch gekennzeichnet, dass** in zumindest einem Verfahrensschritt (104a) der Grundkörper (16a; 16b; 16c; 16d; 16e; 16f) durch ein Extrusionsverfahren aus dem vollständig, insbesondere rückstandslos, biologisch abbaubaren Material hergestellt wird.

20. Verfahren nach Anspruch 19, **dadurch gekennzeichnet, dass** in zumindest einem Verfahrensschritt (104a) der Grundkörper (16a; 16b; 16c; 16d; 16e; 16f) durch ein Extrusionsverfahren aus dem vollständig, insbesondere rückstandslos, biologisch abbaubaren Material hergestellt wird.

21. Verfahren nach Anspruch 19 oder 20, **dadurch gekennzeichnet, dass** in zumindest einem Verfahrensschritt (104a) der Grundkörper (16a; 16b; 16c; 16d; 16e; 16f) derart hergestellt wird, dass der Grundkörper (16a; 16b; 16c; 16d; 16e; 16f) in einem unbelasteten Zustand, insbesondere entlang einer Mittelachse (14a; 14b; 14c; 14d; 14e; 14f) des Grundkörpers (16a; 16b; 16c; 16d; 16e; 16f) betrachtet, eine gebogene und/oder angewinkelte Grundform aufweist.

22. Verfahren nach einem der Ansprüche 19 bis 21, **dadurch gekennzeichnet, dass** in zumindest einem Verfahrensschritt (104a) der Grundkörper (16a; 16b; 16c; 16d; 16e; 16f) bei einem Herstellen des Grundkörpers (16a; 16b; 16c; 16d; 16e; 16f) direkt auf und/oder an einem Hüllelement (32a; 32b; 32c) ausgebildet wird.

23. Verfahren nach einem der Ansprüche 19 bis 22, **dadurch gekennzeichnet, dass** in zumindest einem Verfahrensschritt (104a) der Grundkörper (16a; 16b; 16c; 16d; 16e; 16f) durch ein diskontinuierliches Extrusionsverfahren hergestellt wird.

24. Verfahren nach einem der Ansprüche 19 bis 23, **dadurch gekennzeichnet, dass** in zumindest einem Verfahrensschritt (104a) zur Herstellung des Grundkörpers (16a; 16b; 16c; 16d; 16e; 16f) mittels einer Mehrzahl an Extrusionsauslassöffnungen (40a) gleichzeitig eine Vielzahl von Streben (26a) ausgeformt werden.

## Claims

1. Plant protection device with at least one base body (16a; 16b; 16c; 16d; 16e; 16f) which is formed in one piece and is configured, in particular for the protection of at least one plant (12a; 12c; 12d; 12e; 12f), to at least partially encompass at least one passage (18a; 18b; 18c; 18d; 18e; 18f), wherein the base body (16a; 16b; 16c; 16d; 16e; 16f) is made of a material that is completely biodegradable, in particular without residue,
wherein the base body (16a; 16b; 16c; 16d; 16e; 16f) is realized as a skeletal structure,
**characterized in that** the base body (16a; 16b; 16c; 16d; 16e; 16f) which is realized as a skeletal structure is formed of a plurality of struts (26a; 26b; 26c; 26d) which are realized integrally with one another via connection points (24a; 24d) and which delimit a plurality of recesses (28a; 28d) from an outer side of the base body (16a; 16b; 16c; 16d; 16e; 16f) towards an inner side of the base body (16a; 16b; 16c; 16d; 16e; 16f) that faces the passage (18a; 18b; 18c; 18d; 18e; 18f),
wherein the connection points (24a; 24d) are formed when a second layer of extruded struts is applied on an extrusion body (36a) over a first layer of extruded struts.

2. Plant protection device according to claim 1,
**characterized in that** the base body (16a; 16b; 16c; 16d; 16e; 16f) is produced by an extrusion procedure from the material that is completely biodegradable, in particular without residue.

3. Plant protection device according to one of the preceding claims,
**characterized in that** the base body (16a; 16b; 16c; 16d; 16e; 16f) is formed of struts (26a; 26b; 26c; 26d) which are produced, in particular directly, by an extrusion procedure from the material that is completely biodegradable, in particular without residue.

4. Plant protection device according to claim 3,
**characterized in that** the struts (26a; 26b; 26c; 26d) are connected, in particular after an extrusion, by a plurality of connection points (24a; 24d) to form a skeletal structure.

5. Plant protection device according to claim 1,
**characterized in that,** in particular in at least one operation state for protecting at least one plant (12a; 12c; 12d; 12e; 12f), the base body (16a; 16b; 16c; 16d; 16e; 16f) has a central axis (14a; 14b; 14c; 14d; 14e; 14f), wherein the base body (16a; 16b; 16c; 16d; 16e; 16f) encompasses the passage (18a; 18b; 18c; 18d; 18e; 18f) around the central axis (14a; 14b; 14c; 14d; 14e; 14f),
wherein the base body (16a; 16b; 16c; 16d; 16e; 16f) is configured to cover at most 70% of an imaginary body that fills the passage (18a; 18b; 18c; 18d; 18e; 18f) viewed along a maximum longitudinal extent (30a; 30d) of the base body (16a; 16b; 16c; 16d; 16e; 16f) perpendicularly to the central axis (14a; 14b; 14c; 14d; 14e; 14f).

6. Plant protection device according to one of the preceding claims, **characterized in that** the base body (16a; 16b; 16c; 16d; 16e; 16f) consists at least for the most part of a gelatin mixture.

7. Plant protection device according to one of the preceding claims, **characterized in that** the base body (16a; 16b; 16c; 16d; 16e; 16f) consists at least for the most part of a lignin mixture.

8. Plant protection device according to one of the preceding claims, **characterized in that** the base body (16a; 16b; 16c; 16d; 16e; 16f) consists at least for the most part of a material mixture comprising polybutylene adipate terephthalate (PBAT), polylactides (PLA) and lignin.

9. Plant protection device according to one of the preceding claims,
**characterized in that** the base body (16a; 16b; 16c; 16d; 16e; 16f) consists at least for the most part of a material mixture comprising polybutylene adipate terephthalate (PBAT), polylactides (PLA) and cellulose and/or wood fibres.

10. Plant protection device according to one of the preceding claims,
**characterized by** at least one enveloping element (32a; 32b; 32c) which is arranged on the base body (16a; 16b; 16c; 16d; 16e; 16f),
wherein the at least one enveloping element (32a; 32b; 32c) is configured to encompass the passage (18a; 18b; 18c; 18d; 18e; 18f) at least partially, in particular at least for the most part, preferably at least substantially completely, viewed along a central axis (14a; 14b; 14c; 14d; 14e; 14f) of the base body (16a; 16b; 16c; 16d; 16e; 16f),
wherein the at least one enveloping element (32a; 32b; 32c) is made of a material that is completely biodegradable, in particular without residue.

11. Plant protection device according to claim 10,
**characterized in that** the base body (16a; 16b; 16c; 16d; 16e; 16f) is configured to support the at least one enveloping element (32a; 32b; 32c) on an inner side facing the passage (18a; 18b; 18c; 18d; 18e; 18f) and on an outer side of the enveloping element (32a; 32b; 32c) facing away from the passage (18a; 18b; 18c; 18d; 18e; 18f).

12. Plant protection device according to claim 10 or 11,
**characterized in that** the at least one enveloping element (32a; 32b; 32c) is at least for the most part made of a nonwoven material.

13. Plant protection device according to claim 12,
**characterized in that** the nonwoven material is made of animal wool, in particular sheep's wool.

14. Plant protection device according to claim 12,
**characterized in that** the nonwoven material is made of plant fibres, in particular cotton fibres.

15. Plant protection device according to one of claims 10 to 14,
**characterized in that** the at least one enveloping element (32b) delimits a plurality of light and/or ventilation recesses (44b).

16. Plant protection device according to one of the preceding claims,
**characterized in that** the base body (16c) comprises at least two skeletal structure layers (52c, 53c) which, in particular in at least one operation state for the protection of at least one plant (12c), respectively at least partially enclose the passage (18c) and which are integrally connected to one another,
wherein radially towards a central axis (14c) of the base body (16c), the at least two skeletal structure layers (52c, 53c) have different distances (54c, 56c) from the central axis (14c) of the base body (16c).

17. Plant protection device at least according to claim 1,
**characterized in that,** in particular in at least one operation state for the protection of a plant (12d), the struts (26d) are in each case formed at least substantially in a straight line viewed along a circumferential direction (58d) around a central axis (14d) of the base body (16d).

18. Plant protection device according to one of the preceding claims,
**characterized in that** the base body (16a; 16b; 16c; 16d; 16e; 16f) forms at least one fastening means (34a; 34e; 34f) for fixing the base body (16a; 16b; 16c; 16d; 16e; 16f) in at least one operation state for the protection of a plant (12a; 12c; 12d; 12e; 12f) and/or for fastening the plant protection device (10a; 10b; 10c; 10d; 10e; 10f) to a support element (20a; 20e) and/or to a plant (12a; 12c; 12d; 12e; 12f),
wherein in particular the fixed base body (16a; 16b; 16c; 16d; 16e; 16f) encompasses the passage (18a; 18b; 18c; 18d; 18e; 18f) in a sleeve-like manner.

19. Method for producing a plant protection device (10a; 10b; 10c; 10d; 10e; 10f) with at least one base body (16a; 16b; 16c; 16d; 16e; 16f) which is formed in one piece and is configured, in particular for the protection of at least one plant (12a; 12c; 12d; 12e; 12f), to at least partially encompass at least one passage (18a; 18b; 18c; 18d; 18e; 18f),
wherein the base body (16a; 16b; 16c; 16d; 16e; 16f) is made of a material that is completely biodegradable, in particular without residue,
wherein the base body (16a; 16b; 16c; 16d; 16e; 16f) is realized as a skeletal structure,
**characterized in that** the struts (26a; 26b; 26c; 26d) are extruded and placed on top of one another in order to form the base body (16a; 16b; 16c; 16d; 16e; 16f),
wherein during a production of the base body (16a; 16b; 16c; 16d; 16e; 16f), in at least one method step (104a) the base body (16a; 16b; 16c; 16d; 16e; 16f) is formed on a cylindrical extrusion body (36a),
wherein the struts (26a; 26b; 26c; 26d) are laid down on a cylindrical extrusion body (36a).

20. Method according to claim 19,
**characterized in that** in at least one method step (104a) the base body (16a; 16b; 16c; 16d; 16e; 16f) is produced by an extrusion procedure from the material that is completely biodegradable, in particular without residue.

21. Method according to claim 19 or 20,
**characterized in that** in at least one method step (104a) the base body (16a; 16b; 16c; 16d; 16e; 16f) is produced in such a way that in an unloaded state, in particular viewed along a central axis (14a; 14b; 14c; 14d; 14e; 14f) of the base body (16a; 16b; 16c; 16d; 16e; 16f), the base body (16a; 16b; 16c; 16d; 16e; 16f) has a bent and/or angled basic shape.

22. Method according to one of claims 19 to 21,
**characterized in that** during production of the base body (16a; 16b; 16c; 16d; 16e; 16), in at least one method step (104a) the base body (16a; 16b; 16c; 16d; 16e; 16f) is formed directly on and/or at an enveloping element (32a; 32b; 32c).

23. Method according to one of claims 19 to 22,
**characterized in that** in at least one method step (104a) the base body (16a; 16b; 16c; 16d; 16e; 16f) is produced by a discontinuous extrusion procedure.

24. Method according to one of claims 19 to 23,
**characterized in that** in at least one method step (104a) for producing the base body (16a; 16b; 16c; 16d; 16e; 16f), a plurality of struts (26a) are formed simultaneously via a plurality of extrusion outlet openings (40a).

## Revendications

1. Dispositif de protection de plantes avec au moins un corps de base (16a ; 16b ; 16c ; 16d ; 16e ; 16f) réalisé d'une seule pièce et prévu - en particulier pour la protection d'au moins une plante (12a ; 12c ; 12d ; 12e ; 12f) - pour entourer au moins partiellement au moins un passage (18a ; 18b ; 18c ; 18d ; 18e ; 18f),
le corps de base (16a ; 16b ; 16c ; 16d ; 16e ; 16f) étant réalisé d'un matériau qui est biodégradable complètement, en particulier sans résidus,
le corps de base (16a ; 16b ; 16c ; 16d ; 16e ; 16f) étant réalisé comme structure squelettique,
**caractérisé en ce que** le corps de base (16a ; 16b ; 16c ; 16d ; 16e ; 16f) réalisé comme structure squelettique est formé par une pluralité d'entretoises (26a ; 26b ; 26c ; 26d) qui sont réalisées intégralement les unes avec les autres par le biais de points de liaison (24a ; 24d) et qui délimitent une pluralité d'évidements (28a ; 28d) à partir d'une face extérieure du corps de base (16a ; 16b ; 16c ; 16d ; 16e ; 16f) vers une face intérieure du corps de base (16a ; 16b ; 16c ; 16d ; 16e ; 16f) tournée vers le passage (18a ; 18b ; 18c ; 18d ; 18e ; 18f),
où les points de liaison (24a ; 24d) sont formés sur un corps d'extrusion (36a) lors de l'application d'une deuxième couche d'entretoises extrudées au-dessus d'une première couche d'entretoises extrudées.

2. Dispositif de protection de plantes selon la revendication 1,
**caractérisé en ce que** le corps de base (16a ; 16b ; 16c ; 16d ; 16e ; 16f) est fabriqué par un procédé d'extrusion à partir du matériau qui est biodégradable complètement, en particulier sans résidus.

3. Dispositif de protection de plantes selon l'une des revendications précédentes,
**caractérisé en ce que** le corps de base (16a ; 16b ; 16c ; 16d ; 16e ; 16f) est formé par d'entretoises (26a ; 26b ; 26c ; 26d) qui sont fabriquées, en particulier directement, moyennant un procédé d'extrusion à partir du matériau qui est biodégradable complètement, en particulier sans résidus.

4. Dispositif de protection de plantes selon la revendication 3,
**caractérisé en ce que** les entretoises (26a ; 26b ; 26c ; 26d) sont reliées, en particulier après une extrusion, par une pluralité de points de liaison (24a ; 24d) pour former une structure squelettique.

5. Dispositif de protection de plantes selon la revendication 1,
**caractérisé en ce que** le corps de base (16a ; 16b ; 16c ; 16d ; 16e ; 16f) comprend, en particulier en au moins un état de fonctionnement, pour la protection d'au moins une plante (12a ; 12c ; 12d ; 12e ; 12f), un axe central (14a ; 14b ; 14c ; 14d ; 14e ; 14f),
où le corps de base (16a ; 16b ; 16c ; 16d ; 16e ; 16f) entoure le passage (18a ; 18b ; 18c ; 18d ; 18e ; 18f) autour de l'axe central (14a ; 14b ; 14c ; 14d ; 14e ; 14f),
où le corps de base (16a ; 16b ; 16c ; 16d ; 16e ; 16f) est prévu pour masquer, vu le long d'une étendue longitudinale maximale (30a ; 30d) du corps de base (16a ; 16b ; 16c ; 16d ; 16e ; 16f) perpendiculairement à l'axe central (14a ; 14b ; 14c ; 14d ; 14e ; 14f), au maximum 70% d'un corps imaginaire remplissant le passage (18a ; 18b ; 18c ; 18d ; 18e ; 18f).

6. Dispositif de protection de plantes selon l'une quelconque des revendications précédentes,
**caractérisé en ce que** le corps de base (16a ; 16b ; 16c ; 16d ; 16e ; 16f) consiste au moins en grande partie en un mélange-gélatine.

7. Dispositif de protection de plantes selon l'une des revendications précédentes,
**caractérisé en ce que** le corps de base (16a ; 16b ; 16c ; 16d ; 16e ; 16f) consiste au moins en grande partie en un mélange-lignine.

8. Dispositif de protection de plantes selon l'une des revendications précédentes,
**caractérisé en ce que** le corps de base (16a ; 16b ; 16c ; 16d ; 16e ; 16f) consiste au moins en grande partie en un mélange de matériaux comprenant du polybutylène adipate téréphtalate (PBAT), des polylactides (PLA) et de la lignine.

9. Dispositif de protection de plantes selon l'une des revendications précédentes,
**caractérisé en ce que** le corps de base (16a ; 16b ; 16c ; 16d ; 16e ; 16f) consiste au moins en grande partie en un mélange de matériaux comprenant du polybutylène adipate téréphtalate (PBAT), des polylactides (PLA) et de la cellulose et/ou des fibres de bois.

10. Dispositif de protection de plantes selon l'une des revendications précédentes,
**caractérisé par** au moins un élément d'enveloppe (32a ; 32b ; 32c) disposé sur le corps de base (16a ; 16b ; 16c ; 16d ; 16e ; 16f),
où l'au moins un élément d'enveloppe (32a ; 32b ; 32c) est prévu pour entourer au moins partiellement, en particulier au moins en grande partie, de préférence au moins sensiblement complètement, le passage (18a ; 18b ; 18c ; 18d ; 18e ; 18f) le long d'un axe central (14a ; 14b ; 14c ; 14d ; 14e ; 14f) du corps de base (16a ; 16b ; 16c ; 16d ; 16e ; 16f),
où l'au moins un élément d'enveloppe (32a ; 32b ; 32c) est réalisé d'un matériau qui est biodégradable complètement, en particulier sans résidus.

11. Dispositif de protection de plantes selon la revendication 10, **caractérisé en ce que** le corps de base (16a ; 16b ; 16c ; 16d ; 16e ; 16f) est prévu pour supporter l'au moins un élément d'enveloppe (32a ; 32b ; 32c) sur une face intérieure tournée vers le passage (18a ; 18b ; 18c ; 18d ; 18e ; 18f) et sur une face extérieure de l'élément d'enveloppe (32a ; 32b ; 32c) détournée du passage (18a ; 18b ; 18c ; 18d ; 18e ; 18f).

12. Dispositif de protection de plantes selon la revendication 10 ou 11, **caractérisé en ce que** l'au moins un élément d'enveloppe (32a ; 32b ; 32c) consiste au moins en grande partie en un matériau non-tissé.

13. Dispositif de protection de plantes selon la revendication 12, **caractérisé en ce que** le matériau non-tissé est réalisé en laine animale, en particulier en laine de mouton.

14. Dispositif de protection de plantes selon la revendication 12, **caractérisé en ce que** le matériau non-tissé est réalisé en fibres végétales, en particulier en fibres-coton.

15. Dispositif de protection de plantes selon l'une des revendications 10 à 14, **caractérisé en ce que** l'au moins un élément d'enveloppe (32b) délimite une pluralité d'évidements de lumière et/ou d'aération (44b).

16. Dispositif de protection de plantes selon l'une des revendications précédentes,
**caractérisé en ce que** le corps de base (16c) comprend au moins deux couches de structure squelettique (52c, 53c) qui, en particulier en au moins un état de fonctionnement pour la protection d'au moins une plante (12c), respectivement entourent au moins partiellement le passage (18c) et qui sont intégralement reliées l'une à l'autre,
où les au moins deux couches de structure squelettique (52c, 53c) présentent - radialement vers un axe central (14c) du corps de base (16c) - des distances différentes (54c, 56c) de l'axe central (14c) du corps de base (16c).

17. Dispositif de protection de plantes au moins selon la revendication 1, **caractérisé en ce que,** en particulier en au moins un état de fonctionnement pour la protection d'une plante (12d), les entretoises (26d) sont respectivement formées au moins sensiblement en ligne droite, vu le long d'une direction circonférentielle (58d) autour d'un axe central (14d) du corps de base (16d).

18. Dispositif de protection de plantes selon l'une des revendications précédentes,
**caractérisé en ce que** le corps de base (16a ; 16b ; 16c ; 16d ; 16e ; 16f) forme au moins un moyen de fixation (34a ; 34e ; 34f) pour la fixation du corps de base (16a ; 16b ; 16c ; 16d ; 16e ; 16f) en au moins un état de fonctionnement pour la protection d'une plante (12a ; 12c ; 12d ; 12e ; 12f) et/ou pour la fixation du dispositif de protection de plantes (10a ; 10b ; 10c ; 10d ; 10e ; 10f) à un élément de soutien (20a ; 20e) et/ou à une plante (12a ; 12c ; 12d ; 12e ; 12f),
où en particulier le corps de base fixé (16a ; 16b ; 16c ; 16d ; 16e ; 16f) entoure le passage (18a ; 18b ; 18c ; 18d ; 18e ; 18f) en forme de douille.

19. Procédé de fabrication d'un dispositif de protection de plantes (10a ; 10b ; 10c ; 10d ; 10e ; 10f) avec au moins un corps de base réalisé d'une seule pièce (16a ; 16b ; 16c ; 16d ; 16e ; 16f) et prévu - en particulier pour la protection d'au moins une plante (12a ; 12c ; 12d ; 12e ; 12f) - pour entourer au moins partiellement au moins un passage (18a ; 18b ; 18c ; 18d ; 18e ; 18f),
le corps de base (16a ; 16b ; 16c ; 16d ; 16e ; 16f) étant réalisé d'un matériau qui est biodégradable complètement, en particulier sans résidus,
le corps de base (16a ; 16b ; 16c ; 16d ; 16e ; 16f) étant réalisé comme structure squelettique,
**caractérisé en ce que** les entretoises (26a ; 26b ; 26c ; 26d) sont extrudées et superposées pour former le corps de base (16a ; 16b ; 16c ; 16d ; 16e ; 16f),
où dans au moins une étape de procédé (104a) lors d'une fabrication du corps de base (16a ; 16b ; 16c ; 16d ; 16e ; 16f), le corps de base (16a ; 16b ; 16c ; 16d ; 16e ; 16f) est formé sur un corps d'extrusion cylindrique (36a), les entretoises (26a ; 26b ; 26c ; 26d) étant déposées sur un corps d'extrusion cylindrique (36a).

20. Procédé selon la revendication 19,
**caractérisé en ce que** dans au moins une étape de procédé (104a) le corps de base (16a ; 16b ; 16c ; 16d ; 16e ; 16f) est fabriqué moyennant un procédé d'extrusion à partir du matériau qui est biodégradable complètement, en particulier sans résidus.

21. Procédé selon la revendication 19 ou 20,
**caractérisé en ce que** dans au moins une étape de procédé (104a) le corps de base (16a ; 16b ; 16c ; 16d ; 16e ; 16f) est fabriqué de telle manière que dans un état non sollicité le corps de base (16a ; 16b ; 16c ; 16d ; 16e ; 16f) présente une forme de base courbée et/ou coudée, en particulier vu le long d'un axe central (14a ; 14b ; 14c ; 14d ; 14e ; 14f) du corps de base (16a ; 16b ; 16c ; 16d ; 16e ; 16f).

22. Procédé selon l'une des revendications 19 à 21,
**caractérisé en ce que** lors d'une fabrication du corps de base (16a ; 16b ; 16c ; 16d ; 16e ; 16f), dans au moins une étape de procédé (104a) le corps de base (16a ; 16b ; 16c ; 16d ; 16e ; 16f) est formé directement sur et/ou à un élément d'enveloppe (32a ; 32b ; 32c).

23. Procédé selon l'une des revendications 19 à 22,
**caractérisé en ce que** dans au moins une étape de procédé (104a) le corps de base (16a ; 16b ; 16c ; 16d ; 16e ; 16f) est fabriqué moyennant un procédé d'extrusion discontinu.

24. Procédé selon l'une des revendications 19 à 23,
**caractérisé en ce que** dans au moins une étape de procédé (104a), pour la fabrication du corps de base (16a ; 16b ; 16c ; 16d ; 16e ; 16f), une pluralité d'entretoises (26a) sont formées simultanément au moyen d'une pluralité d'ouvertures de sortie d'extrusion (40a).
